# EUROPEAN PATENT SPECIFICATION

(11) **EP 3 730 925 B1**
(45) Date of publication and mention of the grant of the patent: **03.05.2023**
(21) Application number: 20171044.9
(22) Date of filing: 23.04.2020
(51) Int. Cl.: G01N 1/22

(54) **FIRMWARE DESIGN FOR FACILITY NAVIGATION, AND AREA AND LOCATION DATA MANAGEMENT OF PARTICLE SAMPLING AND ANALYSIS INSTRUMENTS**
FIRMWARE-ENTWURF ZUR EINRICHTUNGSNAVIGATION SOWIE BEREICHS- UND POSITIONSDATENVERWALTUNG VON PARTIKELPROBENENTNAHME- UND -ANALYSEGERÄTEN
CONCEPTION DE MICROLOGICIEL POUR LA NAVIGATION DANS LES INSTALLATIONS ET LA GESTION DES DONNÉES DE LOCALISATION ET DE ZONE DES INSTRUMENTS D'ÉCHANTILLONNAGE ET D'ANALYSE DES PARTICULES

(30) Priority: 25.04.2019 US 201916394931
(43) Date of publication of application: 28.10.2020
(73) Proprietor: Particle Measuring Systems, Inc., Boulder, CO 80301 (US)
(72) Inventor: PANDOLFI, Daniele, Boulder, Colorado 80301 (US); MICHAELIS, Matt, Boulder, Colorado 80301 (US); HARTIGAN, Paul B., Boulder, Colorado 80301 (US); KETCHAM, Cliff, Boulder, Colorado 80301 (US)
(74) Representative: Ter Meer Steinmeister & Partner

(56) References cited:
- WO-A1-2018/165590
- US-A1- 2011 252 897
- US-A1- 2015 259 723
- US-A1- 2016 256 097

## Description

### CROSS-REFERENCE TO RELATED APPLICATIONS

This application claims the benefit of priority from U.S. Patent Application No. 16/394,931, filed April 25, 2019.

### BACKGROUND OF INVENTION

The invention is generally in the field of particle sampling, collection and analysis. The invention relates generally to devices and methods for sampling and characterizing particles in fluids include air and process chemicals (e.g., gases and liquids) for applications including the evaluation of contaminants in a range of cleanroom and manufacturing environments. More specifically, provided are methods and systems that provide for management of many different sampling locations within a facility.

Cleanrooms and clean zones are commonly used in semiconductor and pharmaceutical manufacturing facilities. For the semiconductor industry, an increase in airborne particulate concentration can result in a decrease in fabrication efficiency, as particles that settle on semiconductor wafers will impact or interfere with the small length scale manufacturing processes. For the pharmaceutical industry, where this type of real-time efficiency feedback is lacking, contamination by airborne particulates and biological contaminants puts pharmaceutical products at risk for failing to meet cleanliness level standards established by the Food and Drug Administration (FDA).

Standards for the classification of cleanroom particle levels and standards for testing and monitoring to ensure compliance are provided by ISO 14664-1 and 14664-2. Aerosol optical particle counters are commonly used to determine the airborne particle contamination levels in cleanrooms and clean zones and liquid particle counters are used to optically measure particle contamination levels in process fluids. Where microbiological particles are a particular concern, such as in the pharmaceutical industry, not only is quantification of the number of airborne particles important, but evaluating the viability and identity of microbiological particles is also important. ISO 14698-1 and 14698-2 provide standards for evaluation of cleanroom and clean zone environments for biocontaminants.

Collection and analysis of airborne biological particles is commonly achieved using a variety of techniques including settling plates, contact plates, surface swabbing, fingertip sampling and impactor-based active air samplers. Cascade impactors have traditionally been used for collection and sizing of particles. In these devices, a series of accelerations and inertial impacts successively strip smaller and smaller particles from a fluid flow. Each single stage of an inertial impactor operates on the principle that particles suspended in air can be collected by forcing a dramatic change in the direction of the particle containing airflow, where the inertia of the particle will separate the particle from the airflow streamlines and allow it to impact on the surface. Biswas et al. describe the efficiency at which particles can be collected in a high velocity inertial impactor *(*Environ. Sci. Technol., 1984, 18(8), 611-616).

In many cleanroom environments, retrieving size information from a particle impactor is not necessary. In this case, a single stage active air sampling impactor system is sufficient to collect biological particle concentrations subject to subsequent detection and analysis. In an impactor-based active air sampler used for collection of biological particles, the impact/collection surface commonly comprises a growth medium, such as an agar plate, as would be used with other biological particle collection techniques. After the particles are collected onto the growth media surface, the media is incubated to allow the biological particles to reproduce. Once the colonies reach a large enough size, they can be identified and characterized, for example using microscopic imaging, fluorescence, staining or other techniques, or simply counted visually by eye or by image analysis techniques.

For these types of biological particle collection and analysis techniques, various operational aspects are important to ensure efficient collection, detection and analysis. For example, the collection efficiency is of critical importance, as failing to detect that biological particles are present in cleanroom air can result in the cleanroom environment having higher levels of contamination than detected. Upon determination that under counting has occurred, pharmaceutical products made in those environments can be identified as failing to meet required standards, potentially leading to costly product recalls. Similarly, failing to ensure that the viability of collected biological particles is maintained during the collection process will also result in under counting. Such a situation can arise, for example, if the collected biological particles are destroyed, damaged or otherwise rendered non-viable upon impact with the growth medium, such that the collected particles do not replicate during the incubation process and, therefore, cannot be subsequently identified.

On the opposite extreme, biological particle concentrations can be overestimated due to false positives. Over counting of this nature arises where a biological particle that is not collected from the cleanroom air, but is otherwise placed in contact with the growth medium, is allowed to replicate during the incubation process and is improperly identified as originating from the cleanroom air. Situations that contribute to false positives include failing to properly sterilize the growth medium and collection system prior to particle collection and improper handling of the growth medium by cleanroom personnel as it is installed into a particle collection system and/or removed from the particle collection system and placed into the incubator. Again, this can result in a pharmaceutical product being identified as failing to meet required standards. Without sufficient measures to identify false positives, such a situation can result in pharmaceutical products that actually meet the required standards, but are destroyed due to an overestimation of biological particle concentration in the cleanroom air indicating that the standards were not met.

There remains a need in the art for particle collection systems capable of achieving efficient sampling of biological particles. For example, particle collection systems are needed for cleanroom and manufacturing applications that provide high particle collection efficiencies while maintaining the viabilities of collected bioparticles. In addition, particle collection systems are needed for cleanroom and manufacturing applications that reduce the occurrence of false positive detection events. There is also a need, particularly for applications requiring a large number of samples, with each sample associated with a specific location in a facility, for managing and tracking of the many different sampling locations within a facility.

### SUMMARY OF THE INVENTION

Provided herein are a method according to claim 1 and a device according to claim 14 for achieving simple and straightforward management of many different sampling locations within a facility. This management can be particularly challenging for applications where there may hundreds or more of unique sampling locations, and each sampling location having a sample associated therewith.

In an embodiment, a method of operating a portable particle sampling device is provided for sampling an environment at a sampling location, the method comprising the steps of: (i) associating a sampling location with a unique identifier, wherein the unique identifier comprises an area and the sampling location; (ii) selecting the area; (iii) displaying a sampling location associated with the selected area on a graphical user interface (GUI) connected to the device, wherein said displaying includes causing spatial data to be displayed as a graphical map to the user; and (iv) sampling the environment at the sampling location with the device.

In an embodiment, method of operating a portable particle sampling device is provided for sampling an environment at a sampling location, the method comprising the steps of: (i) associating a sampling location with a unique identifier, wherein the unique identifier comprises an area and the sampling location; (ii) selecting the area; (iii) displaying a sampling location associated with the selected area on a graphical user interface (GUI) connected to the device; (iv) receiving an indication that the device has arrived at a sampling location; and in response to the indication, loading a device recipe for at least one of: particle sampling, and particle analysis; and (v) sampling the environment at the sampling location with the device.

In an embodiment, a portable particle sampling device is provided comprising: (i) a device housing including a sampling port; (ii) a sampler positioned in the housing and in flow communication with the sampling port; (iii) a display visible to a user of the device; and (iv) a processor in communication with: the display, the sampler, and at least one memory device positioned at least one of: in or on the device housing, and remote from the device housing, wherein the processor is programmed to: (1) associate a device sampling location with a unique identifier, wherein the unique identifier comprises an area and the sampling position; (22) facilitate a user of the device selecting the area; and (3) display, via a graphical user interface (GUI) on the display, a sampling location associated with the selected area to the user including spatial data displayed as a graphical map to the user.

In an embodiment, a portable particle sampling device is provided comprising (i) a device housing including a sampling port; (ii) a sampler positioned in the housing and in flow communication with the sampling port; (ii) a display visible to a user of the device; and (iv) a processor in communication with: the display, the sampler, and at least one memory device positioned at least one of: in or on the device housing, and remote from the device housing, wherein the processor is programmed to: (1) associate a device sampling location with a unique identifier, wherein the unique identifier comprises an area and the sampling position; (2) facilitate a user of the device selecting the area; display, via a graphical user interface (GUI) on the display, a sampling location associated with the selected area to the user; (3) receive an indication that the device has arrived at the sampling location; and, (4) in response to the indication, load a device recipe for at least one of: particle sampling, and particle analysis.

In an embodiment the methods and devices including executing a device recipe for the at least one of: the particle sampling, and the particle analysis.

In one aspect of the disclosure, a method of operating a portable particle sampling device is provided. The method comprises the steps of: sampling an environment at a sampling location with the device; associating the sampling location with a unique identifier, wherein the unique identifier comprises an area and the sampling location; selecting the area; and displaying a sampling location associated with the selected area on a graphical user interface (GUI) connected to the device, and further including in some embodiments of this aspect receiving an indication that the device has arrived at a sampling location; and in response to the indication, loading a device recipe for at least one of: particle sampling, and particle analysis. In an embodiment, the unique identifier further comprises a room.

In an embodiment, the method further comprises the step of providing the device to a user tasked with sampling a facility at the sampling location, wherein the facility has a plurality of spatial tiers including: a building, the area, and a room. In the embodiment, the method may further comprise the steps of receiving a request from the user for spatial data for one of the plurality of spatial tiers of the facility; and in response to the request, displaying the spatial data to the user to facilitate the user navigating to the sampling location. In the embodiment, the device may comprise a first device and at least a second device, and the method may further comprise exporting at least one of: the spatial data of the facility, a device recipe, and an identifier of the user, from the first to the at least a second device. In the embodiment, the device may comprise a first device and at least a second device, and the method may further comprise importing at least one of: the spatial data of the facility, a device recipe, and an identifier of the user, from the first to the at least a second device.

In another embodiment, the method may further comprise the steps of receiving an indication that the device has arrived at the sampling location; and in response to the indication, loading a device recipe for at least one of: particle sampling, and particle analysis. In the embodiment, the indication may be received from the user via the GUI. In the method according to this embodiment, the step of loading the device recipe may include loading the recipe according to the sampling location corresponding to the indication received. In the embodiment, the device may be provided to the user pre-loaded with at least one recipe for the sampling location(s).

In the embodiment, the associating step may comprise in response to the device sampling and/or analyzing particles of the sampling location, storing sample data for the sampling location in association with: the unique identifier, and the device recipe. For example, the sample data for the sampling location may be stored in association with the unique identifier, and an identifier of the device recipe. In the method according to this embodiment, the sample data may be further stored in association with an identifier of the user (e.g., a username). In the embodiment, the sample data may be further stored in association with a time and date at which the device sampled the environment at the sampling location. The method according to this embodiment may further comprise transmitting the sample data to a location remote from the device for at least one of: monitoring, and archiving, of the sample data.

In yet another embodiment, the method further comprises loading a sampling plan routine corresponding to the sampling of the facility by the user, wherein the device is provided to the user pre-loaded with the sampling plan routine. In the embodiment, the sampling plan routine may include the spatial data of the facility. The method according to this embodiment may further comprise the step of loading user instructions corresponding to the sampling plan routine, wherein the device is provided to the user pre-loaded with the user instructions. The method of the embodiment may comprise the steps of receiving a request from the user for the user instructions for the sampling; determining responsive user instructions for the at least one sampling location; and displaying the responsive user instructions as at least one of: text, and graphics, to the user. The method according to this embodiment may further comprise causing the GUI and the user instructions to be displayed concurrently to the user, or causing the user instructions to be displayed as a portion of the GUI.

In still another embodiment, for the method step of receiving a request from the user for spatial data, the request may be received via the GUI. In the embodiment, the user interacts with the GUI via a touchscreen display of the device. In the method according to this embodiment, the request may be received from the user via a GUI drop-down menu including at least one of: textual, and graphical descriptors, of the plurality of spatial tiers of the facility. In the method of this embodiment, the receiving step may include receiving an indication of which of the textual and/or graphical descriptors was selected by the user from the drop-down menu. In the embodiment, the responsive spatial data may be displayed based on the indication of which of the textual or graphical descriptors were received.

In another embodiment, the method step of displaying the spatial data to the user includes causing responsive spatial data to be displayed as a graphical map to the user. In the embodiment, the graphical may be stored as a standard format image file, for example and without limitation, a jpg file or a png file. The method according to this embodiment may further comprise causing the GUI and the graphical map to be displayed concurrently to the user, or causing the graphical map to be displayed, to the user, as a portion of the GUI. In this embodiment, the step of causing responsive spatial data to be displayed as a graphical map to the user may include displaying a graphical map of the room. In the embodiment, the graphical map may include the sampling location(s).

In yet another embodiment, the method further comprises loading the spatial data corresponding to the plurality of spatial tiers of the facility, wherein the device is provided to the user pre-loaded with the spatial data. In the embodiment, the spatial data may include one or more graphical maps for one or more of the plurality of spatial tiers of the facility. The displaying step according to the embodiment may include displaying the one or more graphical maps to the user, and wherein the one or more graphical maps include at least one or: textual labels, and graphical labels, for the one or more of the plurality of spatial tiers of the facility. In the embodiment, the one or more graphical maps further include at least one of: textual labels, and graphical labels, for the sampling location.

In another aspect of the disclosure, a portable particle sampling device is provided for sampling an environment at a sampling location. The device comprises a device housing including a sampling port; a sampler positioned in the housing and in flow communication with the sampling port; a display visible to a user of the device; and a processor in communication with: the display, the sampler, and at least one memory device positioned at least one of: in or on the device housing, and remote from the device housing. The processor is programmed to: associate the sampling location with a unique identifier, wherein the unique identifier comprises an area and a sampling location; facilitate a user of the device selecting the area; and display a sampling location associated with the selected area on a GUI connected to the device and, further in some embodiments, receive an indication that the device has arrived at the sampling location; and in response to the indication, load a device recipe for at least one of: particle sampling, and particle analysis.

In yet another aspect of the disclosure, a non-transitory computer-readable medium (NTCRM) is provided. The NTCRM stores, as software, program instructions which, when executed by one or more processors of, or in communication with, a portable particle sampling device, cause the processor(s) to: associate a sampling location of the device with a unique identifier, wherein the unique identifier comprises an area of a facility and the sampling location; facilitate a user of the device selecting the area; and display the sampling location associated with the selected area on a GUI connected to the device.

In still another aspect of the disclosure, a computer-implemented method of operating a portable particle sampling device for sampling locations in a facility is provided. The facility has a plurality of spatial tiers including: at least one building, at least one area, and at least one room. The computer-implemented method comprises the steps of: providing the device to a user tasked with sampling at least one of the sampling locations in the facility; receiving, by a processor of the device, a request from the user for spatial data for one of the plurality of spatial tiers of the facility stored in a memory in communication with the processor; in response to the request, displaying, by the processor, the spatial data to the user to facilitate the user navigating to the at least one sampling location; receiving, by the processor, an indication that the user has arrived at the at least one sampling location; in response to the indication, loading, by the processor, a device recipe for at least one of: particle sampling, and particle analysis, from the memory; and in response to the device sampling and/or analyzing the particles of the least one sampling location using the recipe, storing, by the processor, particle sample data for the at least one sampling location in the memory in association with identifiers of: the at least one sampling location, and the recipe.

In another aspect of the disclosure, a portable particle sampling device for sampling locations in a facility is provided. The device comprises a device housing including a sampling port; a sampler positioned in the housing and in flow communication with the sampling port; a display visible to a user of the device; and a processor in communication with: the display, the sampler, and at least one memory device positioned at least one of: in or on the device housing, and remote from the device housing. The processor is programmed to: receive a request from a user of the device for spatial data for one of the plurality of spatial tiers of the facility stored in the memory; in response to the request, display the spatial data to the user to facilitate the user navigating to at least one of the sampling locations; receive an indication that the user has arrived at the sampling location(s); in response to the indication, load a device recipe for at least one of: particle sampling, and particle analysis, from the memory; and in response to the device sampling and/or analyzing the particles of the sampling location(s) using the recipe, store particle sample data for the sampling location(s) in the memory in association with identifiers of: the sampling location(s), and the recipe.

In yet another aspect of the disclosure, the method is for operating a biological sampler by sampling an environment at a sampling position with the biological sampler and associating the sampling position with a unique identifier, wherein the unique identifier comprises an area and a location. Any of the methods, systems and devices provided herein is an integrated method or unit. Such integration is beneficial in terms of sampling management and control, avoiding separate components that must both be moved together and/or connected to each other.

In this manner, a user operating a portable biological sampler may rapidly proceed from sampling position to sampling position taking samples and save time by being able to rapidly access the unique identifier associated with each sampling position, in a rapid, uniform and integrated manner.

For example, the sampling position may be pre-selected and the unique identifier of the sampling position pre-loaded into the biological sampler. This refers to the situation where sampling position is known ahead of time and loaded into the biological sampler. The user of the biological sampler then proceeds to the sampling position and takes the sample.

The methods provided herein, alternatively, are compatible with a user selecting a sampling position and inputting the area and the location of the sampling position into the biological sampler. In this manner, the biological sampler may be considered subsequently pre-set with that input sampling position for later sampling, such as by another user or at a later time and/or date.

In an embodiment, the sampling and associating steps are repeated at a plurality of distinct sampling positions, wherein each sampling position has a unique identifier that is different from a unique identifier of every other sampling position. The methods and devices are compatible with any number of distinct sampling positions. In an aspect, the plurality of distinct sampling positions is greater than or equal to 2 and less than or equal to 1,000.

In an embodiment, the preselected sampling position comprises a plurality of areas, and each area comprises a plurality of locations. In an aspect, the number of areas is selected from a range that is greater than or equal to 2 and less than or equal to 500, and each area is associated with a plurality of locations, wherein the number of locations for each area is independently selected from a range that is greater than or equal to 2 and less than or equal to 500. As the number of sample positions increases, management of associated samples becomes increasingly complicated. The systems and methods provided herein allow rapid selection for sample positions that are associated by area and location. For example, for sample positions that are described as having 10 areas, with each area having 10 locations, selection of an area automatically filters the number of possible sample locations to 10. This is in contrast to conventional samplers where a list of all 100 locations is presented and a user must select one of the 100 locations. This can be a significant resource and time sink with attendant inefficiency. This inefficiency is substantially avoided herein by the association of the sampling position with the unique identifier.

The area and location may correspond to any number of physical locations or descriptors as desired and tailored for the specific application. For example, the area may correspond to a campus, a building, a floor, a process line, or a room. The location may then accordingly correspond to a position within the area. In an aspect, the area corresponds to a room and the location corresponds to a position within the room. In a similar manner, the area may correspond to a process line in a manufacturing application with a first location corresponding to a first sampling position to detect biologicals associated with the process line and a second location corresponding to a second sampling position to detect biologicals in a control location within the process line.

In this manner, as a user enters a room or process line, the area corresponding to the room or process line is provided to the sampler, and the number of possible sample positions accordingly reduced to those having the area associated therewith.

In an aspect, the position is a fixed site within a room.

In an embodiment, the unique identifier comprises at least one additional unique identifier variable that is a sub-location or a supra-area. Such an additional unique identifier variable may be useful to further subdivide the sampling position, such as by floor/room/position; building/room/position; operator/room/position; division/process/position; and the like.

Any of the sampling positions may be labeled to facilitate sampler positioning. The label may be physically observed by a user who can efficiently proceed to the desired position with the sampler. To further improve efficiency, the label may be tagged, wherein the tagging provides automatic identification by the biological sampler of the unique identifier. This may be a label that is bar-coded and read by the sampler, using a radio-frequency identification (RFID) and corresponding reader, or other methods known in the art.

In an embodiment, any of the methods provided herein further comprises the step of identifying the area in which the biological sampler is positioned; and inputting the identified area to the biological sampler data, thereby reducing the number of accessible sampling positions displayed by the biological sampler. In an aspect, the inputting step comprises manual entry by a user of the biological sampler. The inputting step may be further improved by selecting the location from a sampler-displayed list of locations available for the inputted area.

The identifying step may be automated so that a user need not input information directly. In an embodiment, the automated step is selected from the group consisting of: scanning; positioning the sampler in close proximity to a radio frequency identification tag; and tracking a biological sampler position with a positioning receiver connected to the biological sampler. A list of locations associated with the inputted area may be displayed by the biological sampler, and the user can then select from the list.

Any of the methods provided herein may relate to a sampler that has an impact surface for collecting and growing biological particles that have impacted the impact surface. In an embodiment, the sampling comprises exposing an impact surface of the sampler to sample gas; and removing the impact surface from the sampler. As discussed, such sampling that is performed for an individual sampler location becomes difficult to manage when there is a large number of distinct individual sampler locations. The methods provided herein, therefore, are particularly useful for managing such samplers and samples.

In an embodiment, the method further comprises the step of associating the removed impact surface with the unique identifier. In an aspect, the associating the removed impact surface with the unique identifier comprises tagging. The tagging may comprise providing a readable bar code to the impact surface or a container in which the impact surface is confined. In an aspect, the impact surface is an exposed surface of a growth media, such as agar.

Any of the methods provided herein may further comprise the step of observing the growth media for biological growth over a time period and the observing comprises visual detection and/or counting of growth colonies arising from individual viable biological particle impacts with the impact surface.

Any of the methods provided herein may relate to a sampling step that comprises collection of biological particles for a preselected sampling time.

In an embodiment, the method further comprises the step of associating a sample parameter with the unique identifier. Examples of sample parameters include a sample parameter selected from the group consisting of: sampler area; sampler location; a user-provided comment; sample volume; time sampled, sample start date; sample start time; sample end date, sample end time, flow rate; target time; interval; alarms; pauses; an impactor surface serial number; operator identifier; and any combination thereof.

In an aspect, the impactor surface is confined within a container such as a petri dish having the impactor surface serial number.

In an embodiment, the method further comprises generating a report comprising at least one impactor parameter.

Any of the methods provided herein may be for a biological sampler to detect biologics in air samples, including viable biologics. The method may be used in an industry selected from the group consisting of: pharmaceutical manufacture, chemical manufacture; food processing; food manufacturing; and bioterrorism detection.

Any of the methods provided herein may further comprise the steps of: selecting an area; and displaying a list of all possible locations associated with the selected area on a graphical user interface connected to the biological sampler. In an embodiment, the graphical user interface is integrated with the biological sampler.

In still another embodiment, provided herein is a biological sampler for carrying out any of the methods provided herein. The sampler may comprise a sampling head comprising one or more intake apertures for sampling a fluid flow containing biological particles; an impactor base operationally connected to receive at least a portion of the fluid flow from the sampling head; the impactor base comprising an impact surface for receiving at least a portion of said biological particles in the fluid flow and an outlet for exhausting the fluid flow; a processor for storing one or more sampling positions, wherein the sampling position is associated with a unique identifier comprising an area and a location; and a display operably connected to the processor for displaying all locations associated with an area. The display may comprise a graphical user interface to provide user-selection of one of the locations displayed by the display. In this manner, the sampler position may be rapidly selected during use, thereby minimizing user error and increasing management efficiency, particularly for large number of potential sampling locations.

Without wishing to be bound by any particular theory, there may be discussion herein of beliefs or understandings of underlying principles relating to the devices and methods disclosed herein. It is recognized that regardless of the ultimate correctness of any mechanistic explanation or hypothesis, an embodiment of the invention can nonetheless be operative and useful.

### BRIEF DESCRIPTION OF THE DRAWINGS

**FIG. 1A** and **FIG. 1B** are schematic illustrations of fluid flow components for use with an impact surface of the sampler and corresponding fluid flow with respect to the impact surface.
**FIG. 2** shows a graphical user interface where the area is selected from the main screen.
**FIG. 3** shows a graphical user interface that, based on the area selection, displays possible locations associated with that area and provides the ability to create additional locations for the area.
**FIG. 4** illustrates a report record generated for the sampling position. As desired, any number of sample parameters may be contained in the report record and the sample parameters may be used with the sample to assist in sample management.
**FIG. 5** illustrates an interface for defining unique area/location identifiers along with any other relevant information.
**FIG. 6** illustrates a floor plan of a facility environment where a portable particle analysis device may be used.
**FIG. 7** illustrates a flow chart of a method of operating the portable particle analysis device shown in **FIG. 6****.**
**FIG. 8** illustrates features of the portable particle analysis device shown in **FIG. 6** that may be used with the method of **FIG. 7****,** according to an embodiment of the disclosure.
**FIG. 9** illustrates aspects of the method of **FIG. 7****,** according to some embodiments of the disclosure.
**FIG. 10** illustrates additional aspects of the method of **FIG. 7****,** according to some embodiments of the disclosure.
**FIGs. 11A-11F** illustrate screens and operational aspects of a graphical user interface (GUI) presented to users via a display of the device of **FIG. 8**, according to some embodiments of the disclosure.
**FIGs. 12A-12F** illustrate screens of the device GUI and a web-based tool for use in configuring device map features with requisite spatial tiers along with sampling location(s), according to some embodiments of the disclosure.
**FIG. 13** illustrates a screen of the device GUI for use in additional aspects of configuring and editing the device map features, according to an embodiment of the disclosure.
**FIGs. 14-17** illustrate examples the device GUI and/or web-based interface and tools for use in additional aspects operation of device, including configuring and editing the device map features, according to some embodiments of the disclosure.

### DETAILED DESCRIPTION OF THE INVENTION

In general, the terms and phrases used herein have their art-recognized meaning, which can be found by reference to standard texts, journal references and contexts known to those skilled in the art. The following definitions are provided to clarify their specific use in the context of the invention.

"Particle" refers to a small object which is often regarded as a contaminant. A particle can be any material created by the act of friction, for example when two surfaces come into mechanical contact and there is mechanical movement. Particles can be composed of aggregates of material, such as dust, dirt, smoke, ash, water, soot, metal, minerals, or any combination of these or other materials or contaminants. "Particles" may also refer to biological particles, for example, viruses, spores and microorganisms including bacteria, fungi, archaea, protists, other single cell microorganisms and specifically those microorganisms having a size on the order of 1-20 µm. Biological particles include viable biological particles capable of reproduction, for example, upon incubation with a growth media. A particle may refer to any small object which absorbs or scatters light and is thus detectable by an optical particle counter. As used herein, "particle" is intended to be exclusive of the individual atoms or molecules of a carrier fluid, for example, such gases present in air (e.g., oxygen molecules, nitrogen molecules, argon molecule, etc.) or process gases. Some embodiments of the present invention are capable of sampling, collecting, detecting, sizing, and/or counting particles comprising aggregates of material having a size greater than 100 nm, or 10 µm or greater. Specific particles include particles having a size selected from 100 nm to 10 µm or greater.

The expression "sampling a particle" broadly refers to collection of particles in a fluid flow, for example, from an environment undergoing monitoring. Sampling in this context includes transfer of particles in a fluid flow to an impact surface, for example, the receiving surface of a growth medium. Alternatively sampling may refer to passing particles in a fluid through a particle analysis region, for example, for optical detection and/or characterization. Sampling may refer to collection of particles having one or more preselected characteristics, such as size (e.g., cross sectional dimension such as diameter, effective diameter, etc.), particle type (biological or nonbiological, viable or nonviable, etc.) or particle composition. Sampling may optionally include analysis of collected particles, for example, via subsequent optical analysis, imaging analysis or visual analysis. Sampling may optionally include growth of viable biological particles, for example, via an incubation process involving a growth medium. Such growth is a useful indication of viability as well as for assisting in determining presence of biological particles by visual inspection. A sampler refers to a device for sampling particles.

Impactor refers to a device for sampling particles. In some embodiments, an impactor comprises a sample head including one or more intake apertures for sampling a fluid flow containing particles, whereby at least a portion of the particles are directed on to an impact surface for collection, such as the receiving surface of a growth medium (e.g., culture medium such as agar, broth, etc.) or a substrate such as a filter. Impactors of some embodiment, provide a change of direction of the flow after passage through the intake apertures, wherein particles having preselected characteristics (e.g., size greater than a threshold value) do not make the change in direct and, thus, are received by the impact surface. The threshold size value may be selected such as by varying the separation distance between the exit of the intake aperture and the impact surface and/or varying the flow rate through the intake aperture.

The expression "detecting a particle" broadly refers to sensing, identifying the presence of and/or characterizing a particle. In some embodiments, detecting a particle refers to counting particles. In some embodiments, detecting a particle refers to characterizing and/or measuring a physical characteristic of a particle, such as diameter, cross sectional dimension, shape, size, aerodynamic size, or any combination of these. A particle counter is a device for counting the number of particles in a fluid or volume of fluid, and optionally may also provide for characterization of the particles, for example, on the basis of size (e.g., cross sectional dimension such as diameter or effective diameter), particle type (e.g. biological or nonbiological, or particle composition. An optical particle counter is a device that detects particles by measuring scattering, emission or absorbance of light by particles.

"Flow direction" refers to an axis parallel to the direction the bulk of a fluid is moving when a fluid is flowing. For fluid flowing through a straight flow cell, the flow direction is parallel to the path the bulk of the fluid takes. For fluid flowing through a curved flow cell, the flow direction may be considered tangential to the path the bulk of the fluid takes. For laminar flow, flow direction corresponds to the direction of fluid flow streamlines.

"Flow rate" refers to an amount of fluid flowing past a specified point or through a specified area, such as through intake apertures or a fluid outlet of a particle impactor. In one embodiment a flow rate refers to a mass flow rate, i.e., a mass of the fluid flowing past a specified point or through a specified area. In one embodiment a flow rate is a volumetric flow rate, i.e., a volume of the fluid flowing past a specified point or through a specified area. In one embodiment the flow rate may correspond to an average fluid velocity calculated by the volumetric flow rate divided by the cross-sectional area of the fluid conduit in which flow occurs.

Laminar flow refers to a flow that is predictable, steady and not random, in contrast to turbulent flow, and such flows are useful in the devices and methods provided herein to better control impaction of particles satisfying a certain threshold size to improve detection characteristics. Laminar flow refers to flow situations where the ratio of inertial to viscous forces as defined by the Reynolds number (Re = ρVD/µ; ρ is fluid density, V is average velocity, D is a size of the conduit in which the fluid flows, such as aperture dimension or separation distance, and µ is the fluid viscosity), is less than about 2000, less than about 1000, less than about 100, or less than about 1.

"Characteristic dimension" refers to a width, diameter, or effective diameter of a flow channel such as an aperture. Effective diameter corresponds to a diameter for a circle having a cross-section area equivalent to the flow channel or aperture.

"Integrated" or "integrated part" is used herein to refer to any of the methods or systems described herein that is incorporated within a single device. This ensures that the methods are reliably and rapidly performed, within the context of a single platform, without additional external components that must be connected to a central unit. Accordingly, any of the processors, displays and/or inputs, outputs and the like are integrally part of the biological sampler or impactor device. For example, the display may be a touch screen display that a user directly controls and that is an integral part of the impactor device. The associating may occur via a processor that is embedded within or is part of the sampler or device, so that any sampling data is associated with a unique identifier that comprises an area and a location. This is in contrast to embodiments wherein an external device is connected, such as via a hardwire connection or wireless connection, to the sampler device.

It may be noted that any reference to elements in the singular may also be construed to relate to the plural and vice-versa without limiting the scope of the disclosure to the exact number or type of such elements unless set forth explicitly in the appended claims.

### Example 1: Impactors.

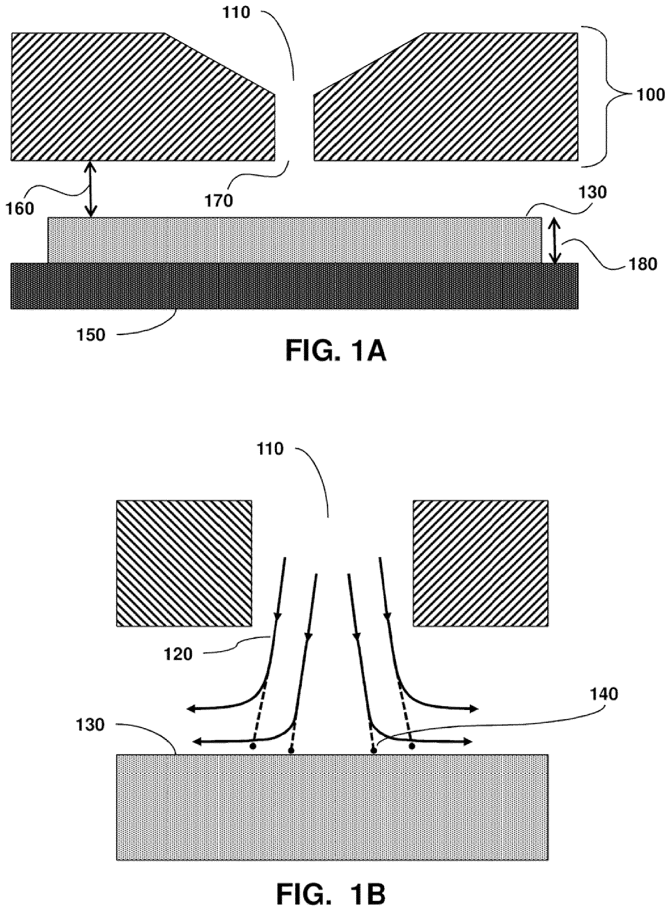

**FIG. 1A** provides a schematic diagram illustrating the general construction of a particle impactor and **FIG. 1B** illustrates an expanded view of a particle impactor to further illustrate the operational principal. As shown in these Figures, gas flow is directed through an intake aperture **110** in a sampling head **100** where it is accelerated towards an impact surface **130**, which forces the gas to rapidly change direction, following flow paths or streamlines **120** under laminar fluid flow conditions. Due to their momentum, particles **140** entrained in the gas flow are unable to make the rapid change in direction and impact on the impact surface **130.** In the embodiment shown in **FIG. 1A** and **FIG. 1B**, impact surface **130** is supported by impactor base **150**. In embodiments, impact surface **130** comprises the receiving surface of a growth medium, such as agar, provided in a growth medium container or petri dish. Viable biological particles collected on the impact surface, for example, can subsequently be grown and evaluated to provide an analysis of the composition of the fluid flow sampled. For collection of biological particles on the impact surface, control of the separation distance **160**, such as a separation distance between the exit **170** of the intake aperture **110** and the impact surface **130**, is important. If the distance is too large, for example, the particles may sufficiently follow the fluid path so as to avoid impact with the impact surface. If the distance is too small, however, the particles may impact the impact surface with a force sufficient to render the particles non-viable or otherwise adversely affect the ability of a biological particle to sufficiently reproduce to be visually detected by a user. After sampling, the impact surface is removed and a time period elapsed sufficient for biological particle growth to provide an indication of presence or absence of biological particles. A new impact surface is provided to the sampler for further sampling, such as at another sampling position.

Accordingly, there is a need in the art to manage the sampling, including in view of the potentially very large number of unique sampling positions. Provided herein are methods and devices that assist in sampling management, including by associating each sampling position with a unique identifier. The unique identifier is defined by an area and location tied to the sampling position.

**Example 2:** Firmware design for Area and Location data management of biological air samples collected on media plates.

The firmware is structured to allow for simple management of many different sampling locations within a facility.

When samples need to be taken at many locations within a facility the current practice is to either enter a specific location onto a sampler manually every time a sample is taken or to manually track the sample either through the use of external paperwork (or electronic methods), or directly onto the sampling plate.

By creating firmware that structures the samples to be taken into a hierarchal fashion it is possible to identify a specific AREA within a facility for example, Filing Line 1. As well as a specific LOCATION within that area, such as Background Location 1.

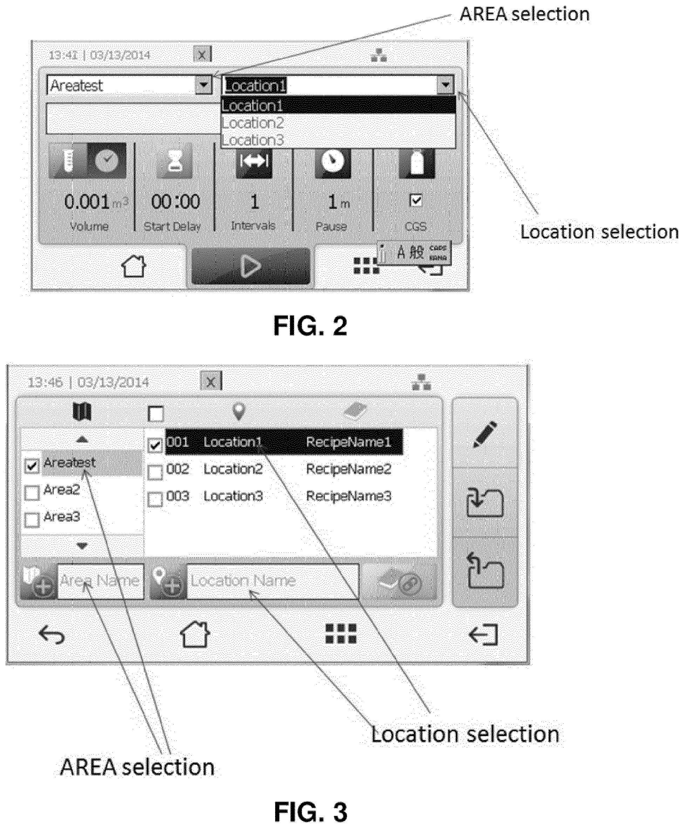

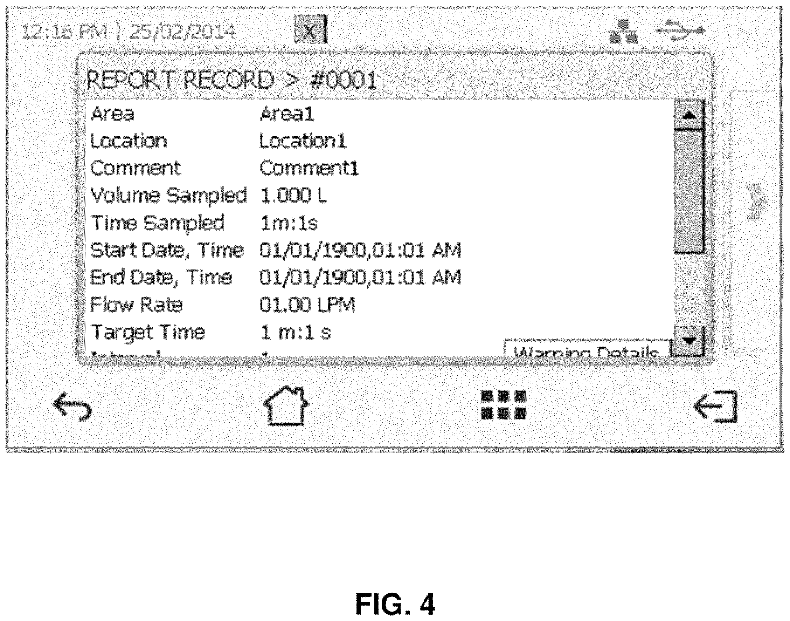

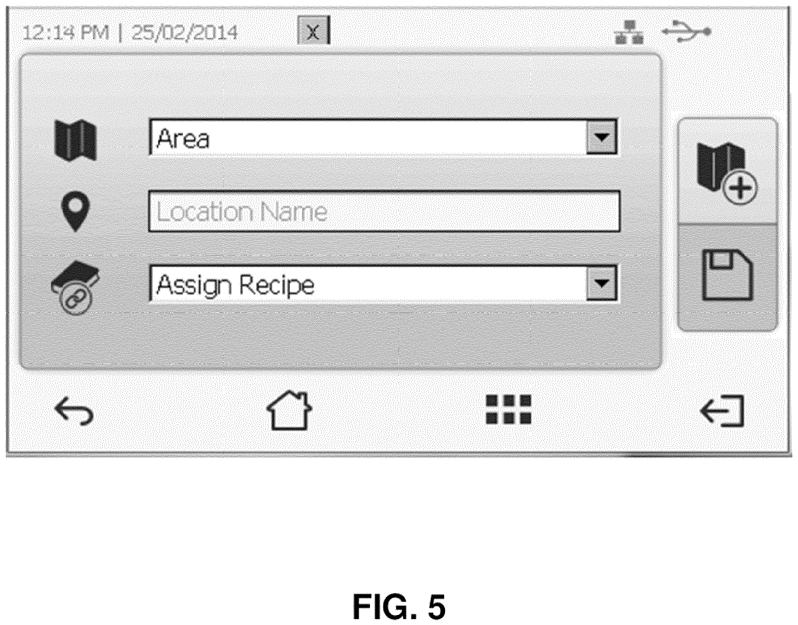

With this type of structure it simplifies the user's selection of the sample point within a particular area and the specific location within that area. This two tiered structure reduces the possibility for error in external recording of the information as well as speeds the ability to identify the proper area and location within that area when taking a sample by having it selectable from a drop down menu. An example is illustrated in **FIGs. 2-4**, with selection of an area (**FIG. 2**), corresponding locations associated with that area (**FIG. 3**), and a generated report record (**FIG. 4**)**.** **FIG. 5** illustrates a user interface to, for example, input a location for a given area and otherwise allow manipulation, variation, and handling of a sampling position.

Existing devices, in contrast, use a single level structure for identification or require manual entry.

Facilities requiring periodic or continual air sampling and monitoring may be large and may require precautions such as gowning by personnel working in areas like cleanrooms. The facilities may span multiple buildings. With experience, personnel conducting air sampling and monitoring of specific areas with facilities develop familiarity with the buildings, areas, and/or rooms they frequent. However, personnel who are new to the facility and/or who are unfamiliar with the layout and floorplans of portions of the facilities requiring air sampling and monitoring may be hindered in their ability to effectively navigate through the areas and rooms of the facility for such tasks. In situations where personnel require gowning and/or personnel protective equipment isolate themselves and/or protect their bodies from the environment of the facility, use of paper floorplan maps and the like marked with for example, sampling locations in facility room(s) and/or area(s), may not be possible due to the risk of contamination of cleanrooms and/or the impracticality and expense of sterilizing anything but essential tools and equipment to bring into cleanrooms.

Similarly, personnel performing air sampling and monitoring of areas and/or rooms in facilities may benefit from bringing with them to sampling locations various job aids such as instruction manuals, standard operating procedures, and the like, including in paper formats. Due to the contamination risk and unavailability and/or impossibility of sterilizing such items for use by workers in cleanrooms, the lack of ready information for use by personnel performing air sampling and monitoring may present difficulties or inefficiencies for such tasks.

Furthermore, workers may be required to perform air sampling and monitoring tasks in conjunction with recording additional information such as location(s) where samples are taken, observations made about, for example, the facility environment, and notes regarding operations, settings, and/or conditions of equipment and instrumentation being used like portable particle analysis devices. As with maps and job aids, including in paper formats, use of paper notepads and writing implements may not be feasible in particular area(s) and/or room(s) (e.g., cleanroom(s)) of a facility. It would be beneficial for personnel and other users engaged in facility air sampling, monitoring, and related tasks to be able to access the aforementioned information to assist their work in a manner that does not present contamination risks to cleanrooms and other sensitive and controlled facility areas and rooms. Embodiments of the disclosure enable integration of navigation maps and tools with obtaining and storing metadata like sampling locations, instrument sampling and/or analysis settings (e.g., "recipes") attached as metadata to, and stored in association with, the instrument data for the analysis of air samples. Other information (e.g., user identity) related to operation of portable particle sampling and/or analysis devices may also be useful and beneficial to attach as metadata to, and store in association with, the instrument data for analysis of air samples.

**Example 3**: Firmware design for multilevel navigation maps and associated particle sample data management of portable particle analysis devices.

A person having ordinary skill in the art will appreciate that the below-described embodiments may be practiced in conjunction with not only the specific devices and systems described in Examples 3 and 4, but also those discussed with respect to Examples 1 and 2, along with any air sampling and/or analysis instrumentation for which the various technical, practical, and regulatory compliance benefits inuring from the embodiments disclosed herein may be realized in like manner. Thus, a further benefit of the disclosed embodiments is that they may be integrated, as by retrofitting and/or upgrading, into existing air sampling and monitoring equipment and/or instrumentation to provide like advantages in a variety of practical settings.

Embodiments of the disclosure, as in this Example 3, as well as Example 4, below, may employ a three-level map system displayed to users of portable air sampling and/or analysis equipment. The three-level map system consists of at least three spatial tiers or levels. The levels correspond to "Facility", "Area" and "Room". The top-most spatial tier is the facility, which may be a building. The middle tier(s) is/are area(s) of the facility. The lowest level tier is a room, which may include one or more rooms within a larger room. The three-level maps system may be made available on a display and/or touch-screen of a portable aerosol particle counter, for instance. Each map level may include one or more textual and/or graphical symbols on it to indicate selectable items including, for example and without limitation, pin(s). In one embodiment, the top-level map allows pins to be touched (selected) to select an Area within the facility, the second level map allows pins to be touched that correspond to one or more rooms within an area, and the lowest level map allows pins on the room map to be touched that correspond to a location for which air sampling and/or monitoring is to be performed. In an example, the name of selected area, room, and/or and sampling location is automatically appended as metadata to any samples taken and/or analytical data pertaining thereto (e.g., particle counts).

A recipe feature is also integrated with the maps. A room monitoring recipe or cleanroom certification recipe (e.g., statistics recipe) may be attached at a room level. A sampling recipe may be attached to the sampling location(s) that may be present and user-selectable at area and/or room level(s). In an embodiment, when a recipe is attached at the room level, for instance, selecting the room from an area level map causes a pop-up message to be generated and displayed to the user informing him or her that the recipe will be loaded. Similarly, when a recipe is attached at the location level, selecting the location may also causes the same or similar action to occur in the disclosed embodiments.

Map files are graphics images in standard format (such as JPG, PNG, and any other suitable image file type capable of being read from a memory device by a computing device (e.g., processor), and further capable of being adequately displayed to a user using an electronic display device). The map files are created external to the particle counter and stored in memory device(s) located in, on, and/or at some position remote from the portable particle sampler and/or analyzer. Processor(s) cause the map file being read from the memory device(s) to be displayed to user on the display device position in or on the portable particle sampler and/or analyzer in view of a user thereof. In an example, once downloaded to a portable particle counter, for instance, the map files are configured by tagging different points on the map with areas, rooms and locations as required. In another example, the map files are so configured prior to being downloaded to the particle counter. In yet another example, the map files are accessed remotely (e.g., via a wireless data communication protocol using transceivers) for display to users by one or more processor and/or computing device(s) of the particle counter from a memory device located outside of the particle counter. The configured maps (and other instrument configuration settings, e.g., recipes) may, via wired and/or wireless data communication mechanisms and protocols, be exported and/or imported from one instrument to another to provide ease of use and operational efficiency.

The disclosed embodiments, described herein as non-limiting examples, further provide facilitation of users' navigation through and between the various spatial tiers of the facility. By providing a visual indication of both the physical layout (e.g., floorplan) and positions of sampling location(s) in the facility (e.g., in room(s) thereof), the disclosed embodiments, effectively reduce probabilities of human error of sampling location selections and related tasks during deployment of portable particle sampling and/or analysis devices. Through computationally-, memory-, and power- efficient user friendly integration of the interactive maps feature with sampling operations and sample data storage in association with unique identifiers like sampling location name, names of the respective spatial tier where samples were taken and/or analyzed, the recipe(s) used therefor, and additional useful information, the disclosed embodiments facilitate downstream data processing and report generation, thereby increasing the efficiency of these tasks. These, and other technical and practical advantages appreciable to persons of ordinary skill in the art, further facilitate users of the disclosed systems, methods, and software complying with standard operating procedures and/or regulatory requirements (e.g., United States Code of Federal Regulations, 21 C.F.R. Part 11 for FDA-regulated operations).

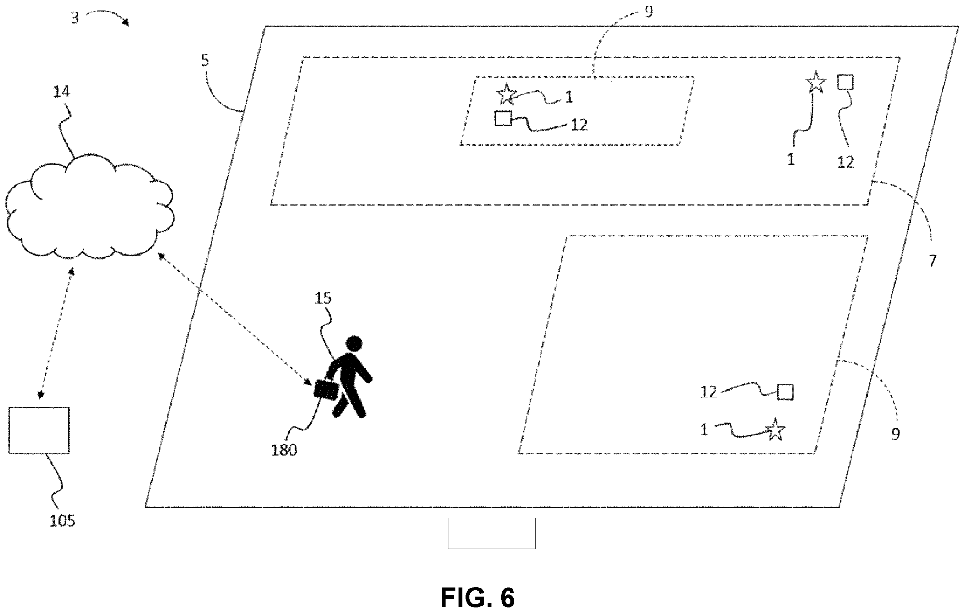

**FIG. 6** illustrates a floor plan of a facility **3** environment where a portable particle analysis device **180** may be used. Facility **3** may include a plurality of spatial tiers. The spatial tiers of the facility **3** are characterized from a high level perspective of the entire facility down to specific sub spaces of and/or inside facility **3**. In an embodiment, the spatial tiers include: at least one building **5** (e.g., as the facility **3**), at least one area **7,** and at least one room **9**. In **FIG. 6**, facility **3** is illustrated without walls, a roof, and similar structures solely for purposes of clarity, and not to imply that the disclosed embodiments are particularly suited to certain types of facilities; this is not the case.

A user **15** of the portable particle analysis device **180** may be tasked with sampling at least one sampling location **1** in the facility **3.** For purposes of this disclosure, "sampling location(s) **1**" is used synonymously with "sampling position(s)," as described above, including with reference to Examples 1 and 2. To do so, user **15** enters facility **3** and navigates throughout facility **3** to the sampling location(s) **1.** While, for instance, walking through the facility **3,** user **15** carries the portable particle analysis device **180** during the course of entering and exiting area(s) **7** and/or room(s) **9** to and/or from the sampling location(s) **1.**

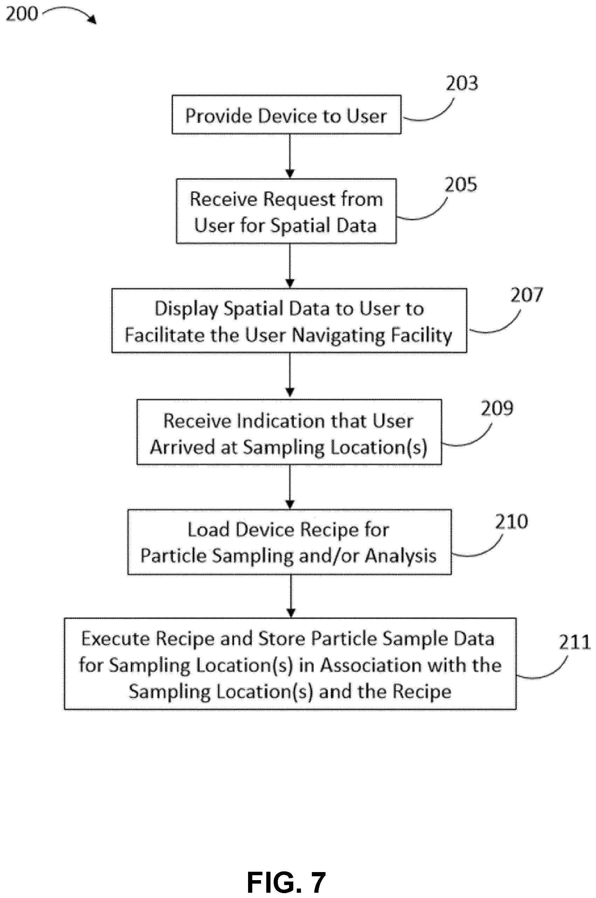

**FIG. 7** illustrates a flow chart of a method of operating the portable particle analysis device shown in **FIG. 6**, in accordance with an embodiment. Although method **200** is described in the context of a computer-implemented method performed by one or more processors, the method **200** may also be performed by a program, custom circuitry, or by a combination of custom circuitry and a program. For example, the method **200** may be executed by a CPU (central processing unit), a GPU (graphics processing unit), or any processor, micro-controller, or application-specific integrated circuit (ASIC) capable of implementing, at least in part, the processes and steps described herein with respect to the various embodiments of method **200.** For instance, method **200** may be implemented by portable particle analysis device **180** functioning as an embedded system.

At step **203**, the portable particle analysis device **180** (hereinafter referred to simply as "device **180**") is provided to the user **15** tasked with sampling the sampling location(s) **1** in the facility **3** (e.g., in a cleanroom type of room 9 thereof). In an example, the user **15** carries device **180** through facility **3** using a handle, as shown in **FIG. 6**. In another example, not shown in **FIG**. **6**, user **15** totes device **180** positioned on a cart or other wheeled device. In yet another example, also not shown in **FIG. 6**, user **15** carries device **180** as a backpack. In any event, device **180** is provided to user **15** at step **203** such that user **15** may safely and effectively transport device **180** through the facility **3** to the sampling location(s) **1** where the sampling task(s) are to be performed. For step **203**, the device **180** may be provided to the user **15** either before or after user **15** enters facility **3**, or specific area(s) **7** or room(s) **9** thereof.

At step **205**, a processor of the device **180** receives a request from the user **15** for spatial data for one of the plurality of spatial tiers of the facility **3**. The spatial data is stored in one or more memory devices (collectively referred to herein more simply as "memory") in communication with the device **180** processor. In an example, the user **15** requests the spatial data to facilitate his or her navigation through facility **3** to reach the sampling location(s) **1**. In another example, the user **15** requests the spatial data to facilitate his or her arrival at the facility from a location remote from the facility (e.g., for a facility having a number of buildings positioned on a campus), either instead of, or in addition to, the user **15** requesting the spatial data to facilitate navigation through a building of the facility.

At step **207**, the device **180** processor causes the spatial data to be displayed to the user **15** to facilitate the user **15** navigating to the at least one sampling location **1.** The spatial data is displayed to the user **15** on a display positioned on or in device **180** and in view of the user **15**. In one embodiment, the processor causes the spatial data to be displayed to the user **15** at step **207** in response to the request having been received by the device **180** processor at step **205**.

At step **209**, the processor of the device **180** receives an indication that the user **15** has arrived at the sampling location(s) **1** in the facility **3**. In one embodiment, the user **15** interacts with device **180** processor using an input/output (I/O) device positioned on or in device **180**. For example, and without limitation, the user **15** may press a button and/or operate a switch on device **180**, speak into a microphone, perform tapping and/or other movements upon device **180**, perform various touching actions and motions on a graphical user interface (GUI) (which the device **180** processor may also utilize to cause the spatial data to be displayed to the user **15**), upon arriving at the sampling location(s) **1.** The sampling location(s) **1** may be labeled (e.g., as text, numbers, and/or graphics provided in view of user **15** on a wall and/or floor of facility **3**), such that the user **15** may navigate there, provide the indication for step **209**, and performing the sampling task(s) using device **180**. In the embodiment, such user **15** actions received by device **180** processor via I/O devices provide the aforementioned arrival indication for step **209**.

In another embodiment, the device **180** processor receives the arrival indication at step **209** automatically and without direct user **15** interaction with device **100**. In an example, facility **3** includes one or more RFID transmitters **12** positioned at or proximal the sampling location(s) **1**, as shown in **FIG. 6**. In the example, device **180** includes one or more receivers for receiving signal(s) from the RFID transmitter(s) **12.** Upon the user **15** successfully navigating to the sampling location(s) **1**, the device **180** processor receives the arrival indication in response to the device **180** receiver receiving the signal from the RFID transmitter **12.** Instead, or additionally, the device **180** processor causes a visual or audible notification to be provide to the user **15** in response to receiving the arrival notification according to this example. In another example, RFID transmitters **12** are employed for this Example 3 in like manner as described with reference to "tagging" and "RFID and corresponding reader" (e.g., receiver antenna(s) positioned on, in, or proximal device **180**) in the "Summary" section of the disclosure.

In yet another embodiment, device **180** includes a barcode and/or QR code reader in communication with device **180** processor and/or memory. A QR code is technically a type of barcode. Traditional (one dimensional) barcodes are a pattern of stripes. Newer (two dimensional) barcodes are generally patterns within a square. There are multiple types of two dimensional barcodes such as QR, Aztec and Data Matrix. The device **180** may include a two dimensional barcode reader to support multiple formats of both one- and two dimensional barcodes. In an example, the sampling location(s) **1** of facility **3** may include may include bar and/or QR codes positioned at or proximal sampling location(s) **1** and in view of user **15.** In a use case, upon the user **15** successfully navigating to the sampling location(s) **1**, user **15** positions the barcode and/or QR code reader of device **180** to point toward the barcode and/or QR code label at or proximal the sampling location(s) **1.** In this embodiment, the device **180** processor receives the arrival indication at step **209** in response to the device **180** barcode and/or QR code reader receiving the signal from the barcode and/or QR code reader of device **180**.

At step **210**, the device **180** processor loads a device **180** recipe from the memory. As used herein, "recipe" means parametric sampling information, or cleanroom certification parameters. Sampling information may include, but is not limited to, the number of samples, the time or volume to sample, alarm information, as well as which sampling location **1** within a room **9** to sample. Cleanroom certification parameters include the sampling parameters required for a specific room to meet a specific type and class of certification. Device **180** may implement several types of recipes for the sampling and/or analysis, as described herein. In an example, a basic sampling and/or analysis includes: a time for which device **180** will sample air of facility **3** at a respective sampling location **1**, a volume of air to be sampled, which may include a flow rate, a number of samples to be taken, and alarm limits, which may be associated with a single sampling location **1** only. In another example, a certification recipe for sampling and/or analysis includes: at least of portion of those parameters describe above for the "basic" recipe, along with additional parameters for certifying an entire room **9** having one or more sampling location(s) **1** in it for purposes of standards and/or regulatory guidelines (e.g., ISO, FDA, EMEA, and/or cGMP). Thus, the "certification" recipe type applies to an entire room **9** to be certified. In yet another example, a monitoring recipe includes a superset of the "basic" recipe. Like the "certification" recipe, the monitoring recipe applies to rooms **9**, and both require sampling at some specification set of sampling location **1** within a room **9**. Using the "monitoring" recipe enables device **180** to execute one or more sampling and/or analysis recipe(s) at multiple sampling locations **1** in a given room **9**. As such, the "monitoring" recipe is tied to the room **9**, instead of being tied to the sampling location **1.**

The recipe is loaded from memory at step **210** for and/or to facilitate the device **180** particle sampling and/or particle analysis, including with any necessary user **15** interaction and/or additional actions by the user **15** beyond the user **15** bringing the device **180** to the sampling location(s) **1.** In one embodiment, the device **180** recipe is loaded from the memory at step **210** in response to the indication that the user **15** has arrived at the sampling location(s) **1** having been received by the device **180** processor at step **209.** In an example, user **15** samples particles and/or performs additional or other tasks using the device **180** according to the recipe loaded from memory. At step **210**, the same recipe may be loaded from memory for the sampling and/or other tasks to be performed and/or facilitated by user **15** using device **180** at the one or more sampling location(s) **1** in facility **3**. Instead, or additionally, different recipes may be loaded from memory for the sampling and/or other tasks to be performed and/or facilitated by user **15** using device **180** for two or more of a plurality of sampling location(s) **1** in facility **3**. For instance, a first sampling location **1** in a first room **9** may call for a first recipe to be loaded from memory at step **210**, and a second sampling location **1** in a second room **9** may call for a second recipe to be loaded from memory at step **210**.

At step **211**, the processor of device **180** stores particle sample data for particles sampled and/or analyzed at the sampling location(s) **1** in the memory in association with unique identifiers. The unique identifiers may be stored in memory as metadata. Device **180** processor and/or additional and/or other processors may utilize these metadata contemporaneously and/or at some later time, as for example and without limitation, for report generation related to particle sampling and/or analysis. The unique identifiers for which the particle sample data for sampling location(s) **1** are stored in association with include the at least one sampling location **1** and/or the recipe(s) used by device **180.** In one embodiment, the device **180** processor stores the particle sample data in association with the unique identifiers in response to the device **180** sampling and/or analyzing the particles at the sampling location(s) **1**, where the device **180** performs the sampling and/or analyzing of the particles, at least in part, by executing the recipe(s) loaded from memory at step **210**. In a use case, user **15** arrives at a sampling location **1** in facility with the device **180**, the device **180** processor receives the arrival indication as described above with reference to step **209**, the device **180** processor loads the recipe from memory, sampling and/or analysis of particles is caused to be performed by the device 180 processor and/or user 15 using device 180 according to the loaded recipe(s) at the sampling location **1**, and upon the sampling and/or analysis being at least partially completed, device **180** processor responsively stores the particle sample data at step **211** in the memory in association with the unique identifiers including the respective sampling location **1** and the recipe(s) loaded for use by device **180** at the respective sampling location(s) **1**.

More illustrative information will now be set forth regarding further details of various algorithms, architectures, and features with which the foregoing framework may be implemented in performance of method **200**, per the desires of the user **15**. It should be strongly noted that the following information is set forth for illustrative purposes and should not be construed as limiting in any manner. Any of the following features may be optionally incorporated with or without the exclusion of other features described.

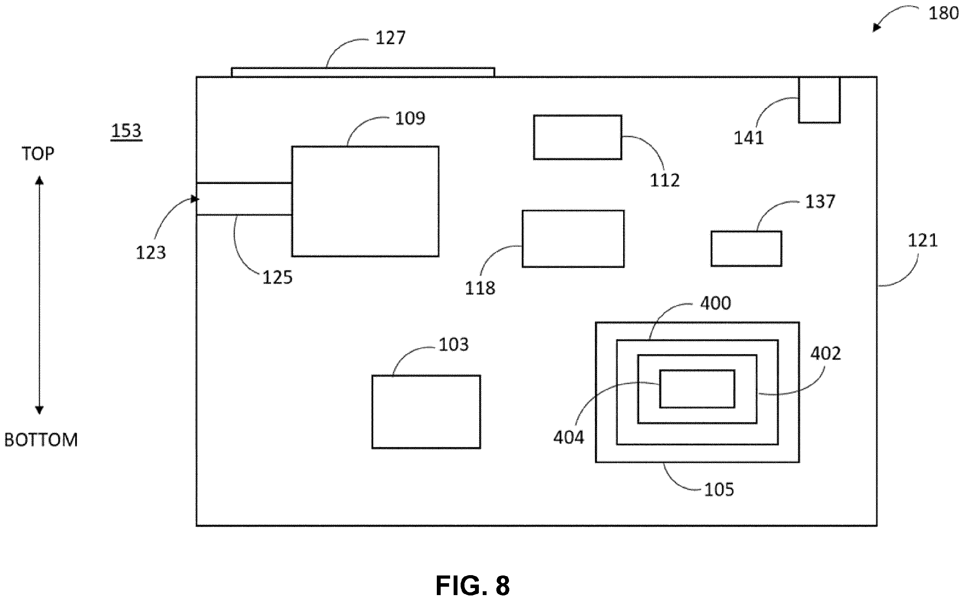

**FIG. 8** illustrates features of the portable particle analysis device **180** shown in **FIG. 6** that may be used with the method **200** of **FIG. 7****,** according to an embodiment of the disclosure. Device **180** includes a device housing **121**. A carrying handle may be coupled to the housing **121** or otherwise be positioned through and/or on housing **121** to facilitate user **15** carrying device **180**. The device housing **121** includes a sampling port **123**. The device **180** includes a particle sampler **125** positioned in the housing **121** and in flow communication with the sampling port **123**. The device **180** includes a sample analyzer **109**, and a display **127** visible to the user **15** of the device **180.**

The device **180** includes one or more processors **103** (collectively referred to herein simply as "processor **103**") in communication with: the display **127**, the sample analyzer **109**, at least one memory device **105** (collectively referred to herein simply as "memory **105**"). In one embodiment, memory **105** is positioned in or on device housing **121**. Instead, or additionally, in another embodiment, memory **105** is positioned outside of and/or remote from device housing **121.** In such other embodiments, processor **103** and memory **105** are in communication with one another via, and communicate with one another using signals (e.g., encoded data signals) sent and/or received through, a network **14**, as shown in **FIG. 6**. In an example, communication among and between processor **103** and remote memory **105** using network **14** includes wireless communication equipment and protocols. Wireless communication among and between device **180** processor **103** and remote memory **105** is facilitated by transceivers positioned in or on device **180** (e.g., transceiver **137**) and/or elsewhere in facility **3** (e.g., WiFi routers and/or modems) (not shown in **FIG**. **6**). In another example, communication using network **14** includes wired communication equipment and protocols. In yet another example, network **14** communication includes a combination of wireless and wired communication equipment and protocols. In an example, communication among and between device **180** processor and remote memory **105** includes wireless and/or wired communication equipment and protocols for utilizing cloud-based processing, storage, and/or communication resources. In an example, network **14** communication utilizes the Internet, including, without limitation, Internet of Things (loT) protocols, practices, and/or standards.

In an example, memory **105** is or includes a non-transitory computer-readable medium **400**. Non-transitory computer-readable medium **400** stores as software **402** processor-executable instructions for operating the portable particle analysis device **180** in accordance with, for example, the disclosed embodiments of method **200**. In an example, processor-executable instructions stored as software **402** includes one or more software modules **404**. When executed by processor(s) **103** that are in communication with memory **105**, the processor-executable instructions cause the processor(s) **103** to implement and/or otherwise perform, at least in part, one or more of the disclosed operations, steps, and/or processes of method **200**, as described herein. "Software" (e.g., software **402**) is used synonymously with "firmware" throughout the entire disclosure.

In one embodiment, step **205** of method **200** is performed and/or otherwise facilitated, at least in part, by processor **103** executing software instructions stored in a spatial data request receiving module **404.** In another embodiment, step **207** of method **200** is performed and/or otherwise facilitated, at least in part, by processor **103** executing software instructions stored in a spatial data displaying module **404**. In yet another embodiment, step **209** of method **200** is performed and/or otherwise facilitated, at least in part, by processor **103** executing software instructions stored in an arrival indication receiving module **404**. In still another embodiment, step **210** of method **200** is performed and/or otherwise facilitated, at least in part, by processor **103** executing software instructions stored in a device recipe loading module **404**. In another embodiment, step **211** of method **200** is performed and/or otherwise facilitated, at least in part, by processor **103** executing software instructions stored in a sample data storing module **404**. As will be appreciated by persons of ordinary skill in the art, the various modules **400** described above may share particular functional blocks, or they have unique blocks not share by other modules **404**. Likewise, software instructions stored in memory **105** as module(s) **404** may be organized in a distributed, centralized, or both, architecture, and device **180** may include additional or other hardware and software components to facilitate troubleshooting, cybersecurity, operational auditing, and/or periodic updates to software **402**.

Device **180** may include at least one I/O device **112** positioned on or in device **180**. Among several possible uses for I/O device(s) **112** - e.g., to control a brightness, contrast, etc. of display **127**, and/or to power device **180** on and off, or place processor **103** in a low power or sleep mode state - I/O device **112** may facilitate user **15** providing and/or initiating actions and inputs for processor **103** to receive, at step **209**, the indication that the user **15** has arrived at the sampling location(s) **1** in the facility **3** (also referred to herein more succinctly as the "arrival indication").

Device **180** may include at least one receiver **118** positioned in or on device **180**. Among several possible uses for receiver(s) **118** - e.g., to facilitate the loading of the recipe from a remote memory **105** for step **210** - receiver **118** facilitates processor **103** receiving signal(s) from RFID transmitter(s) **12** in facility **3** to automatically provide processor **103** the arrival indication at step **209.**

Device **180** may include at least one barcode and/or QR code reader **141** positioned in or on device **180** and in view of at least a portion of the device **180** exterior space **153.** Among several possible uses for reader(s) **141** - e.g., to facilitate decoding of information displayed at one or more locations in facility **3** in the form of barcodes and/or QR codes for storing in memory **105** and/or displaying on the display **127** of device **180** - reader **141** facilitates user **15** scanning the bar- and/or QR codes to facilitate providing processor **103** the arrival indication at step **209**.

In operation of device **180**, the processor **103** loads the recipe from memory **105** at step **210** and the particle sampling and/or particle analysis performed by device **180** and/or user **15** proceeds according to the recipe loaded. The air or other medium occupying the space **153** proximal the sampling port **123** of device is drawn in to the particle sampler **125** (e.g., by suction, vacuum, or like mechanisms). A flow path of the air or other medium into the particle sampler **125** portion of device **180** is directed toward the sample analyzer **109** portion of device **180.** Instrumentation components in the sample analyzer **109** facilitate various qualitative and/or quantitative analyses of the sampled air or other medium including, for example and without limitation, particle counts and characterization of particle sizes. Such components of device **180** and further details and examples of the analyses that may be performed thereby are described with reference to optical particle counters, for example, in in US Patent Nos. 7,745,469, 7,916,29, and 8,154,724. In an example, the analyses performed by the sample analyzer **109** of device **180** result in the sample data pertaining to characterization(s) of the sampled particles and which is/are stored by processor **103** in memory **105** in association with the sample location(s) 1 and/or unique identifier(s) at step **211.**

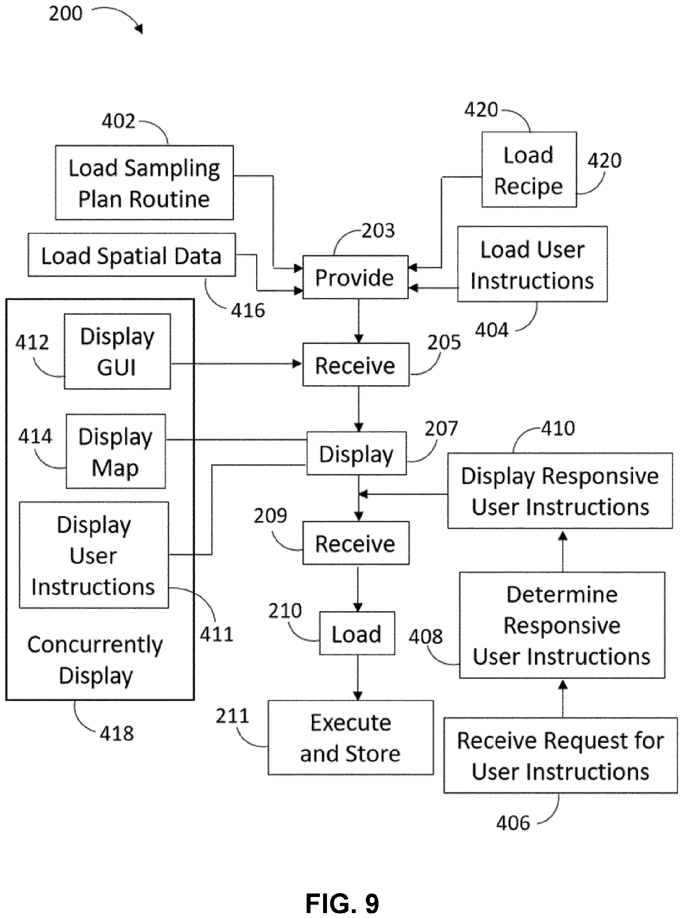

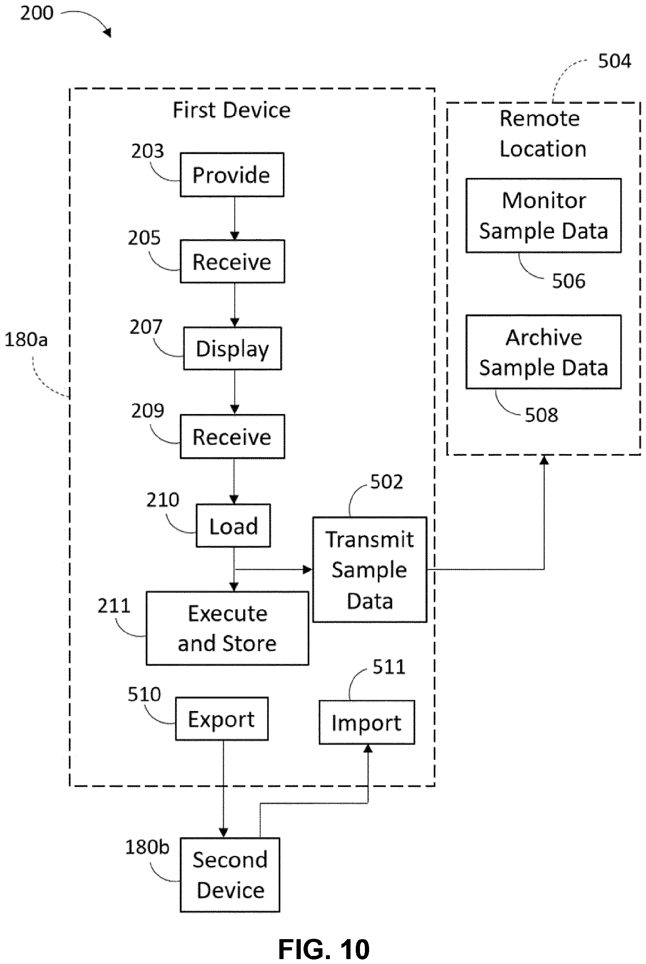

**FIGs. 9** and **10** illustrate aspects of the method **200** of **FIG. 7**, according to some embodiments of the disclosure. The following description of **FIGs. 9** and **10** is organized according to the aforementioned steps of method **200** and, as such, reference to **FIGs. 6-8** and the features shown and/or numbered therein, and described above, is made throughout. It should be strongly noted that the following information is set forth for illustrative purposes and should not be construed as limiting in any manner. Any of the following features may be optionally incorporated with or without the exclusion of other features described.

Step **203:** Providing the device **180** to the user **15.**

Referring to **FIG. 9****,** in an embodiment, method **200** includes a step **402** by which a sampling plan routine is loaded by the processor **103** to and/or from memory **105.** In an example, the sampling plan routine loaded at step **402** corresponds to the sampling of the facility **3** by the user **15.** For instance, the sampling plan routine may include text and/or graphics which the processor **103** causes to be displayed on the device **180** display **127** and which provide information to user **15** such as an order of room(s) **9**, area(s) **7,** and/or sampling location(s) **1** for user to navigate to with device **180** for performing the sampling and/or other tasks at the sampling location(s) **1**. In an example, the device **108** is provided to the user **15** at step **203** with the sampling plan routine pre-loaded in memory **105.** In an embodiment, the sampling plan routine loaded by processor **103** to and/or from memory **105** at step **402** includes the spatial data of facility **3** requested by user **15** and caused to be displayed by processor **103** on display **127** at step **205** and step **207**, respectively.

In an embodiment, method **200** includes a step **404** by which user instructions are loaded by processor **103** to and/or from memory **105.** In an example, the user instructions correspond to the sampling plan routine loaded to and/or from memory **105** at step **402.** For instance, the sampling plan routine may include text and/or graphics which the processor **103** causes to be displayed on the device **180** display **127** and which provide information to user **15** such as how to operate device **180** and/or I/O device(s) **112** thereof, how to troubleshoot device **180**, how to charge a rechargeable battery power supply of device **180**, and other or additional useful information to maximize a probability of user **15** success with performing the sampling of the sampling location(s) **1** in facility **3.**

In an embodiment, method **200** includes a step **406** by which processor **103** receives a request from user **15** for the user instructions. Where a plurality of versions and/or types of content for user instructions are loaded at step **404**, this user **15** request received at step **406** may include an indication of which of a plurality of user instructions is desired to be displayed on display **127** for viewing by user **15**.

In one embodiment, method **200** includes a step **408** by which the processor **103** determines responsive user instructions for the at least one sampling location **1**. In an example, the processor **103** receives, at step **209**, the arrival indication and causes corresponding user instructions to be displayed to user **15** on display **127** for the respective sampling location **1**. In another example, the arrival indication received by processor **103** at step **209** from the user **15** includes an indication of the particular sampling location **1** and processor determines, at step **408** the appropriate user instructions to display to user **15** via display **127**. In the embodiment, method **200** includes a step **410** by which the responsive user instructions determined at step **408** are caused to be displayed by processor **103** on the display **127** to user **15.** The responsive user instructions displayed to user **15** via display **127** may be so displayed at step **410** as text, graphics, and/or combinations thereof.

Step **205**: Receiving user **15** request for spatial data of the facility **3**.

Referring to **FIG. 9****,** in an embodiment, method **200** includes a step **412** by which processor **103** causes a graphical user interface (GUI) to be displayed on the display **127** of device **180**. In an example, display **127** is a touchscreen-type display **127**, and display **127** is thus an I/O device **112** of device **180.** In the example, the user **15** interacts with the GUI via the touchscreen of the display **127**. Instead, or additionally, display **127** is a mouse/cursor-type display **127**, and display **127** and a mouse and/or mouse pad coupled to processor **103** and/or to display **127** are thus I/O devices **112** of device **180**. In that case, example, the user **15** interacts with the GUI via the mouse and cursor for the display **127**. The GUI which is caused to be displayed by processor **103** on display **127** at step **412** is configured and/or adapted for facilitating user **15** interacting with processor **103** and/or memory **105** for purposes of operating device **180**, including directing, as needed, the functionality of components of device **180** including, without limitation, particle sampler **125** and/or sample analyzer **109**.

In an embodiment, at step **205**, the processor **103** receives the request for the spatial data of facility **3** from user **15** via the GUI. In the embodiment, the request for spatial data received by processor **103** from user **15** via the GUI at step **205** is so received via a drop down menu of the GUI. In an example, the drop down menu includes textual and/or graphical indicators and/or descriptors of at least a subset of the plurality of spatial tiers of the facility **3.** In that case, step **205** includes receiving, by the processor **103**, an indication of which of the textual and/or graphical descriptors and/or indicators was touched by the user **15** on the drop-down menu.

Step **207**: Displaying the spatial data to user **15**.

Referring to **FIG. 9**, in an embodiment, in the use case in which step **205** includes the processor **103** receiving the indication of which of the textual and/or graphical descriptors and/or indicators was touched by user **15** on, for example, the drop-down menu of the GUI, the processor **103** causes the responsive spatial data to be displayed on display **127** at step **207** based on the indication of which of the textual and/or graphical descriptors were received by processor **103.**

In an embodiment, at step **207**, the processor **103** displaying the spatial data to the user **15** includes a step **414** of causing, by the processor **103**, the responsive spatial data to be displayed as a graphical map on the device **180** display **127**. In an example, the graphical map is stored in, and caused to be displayed to user **15** on display **127** by processor **103** from, memory **105** as one or more standard format image file(s). In an example, the standard format image file may be stored in memory **105** as a jpg file. In another example, the standard format image file may be stored in memory **105** as a png file. In yet another example, the standard format image file may be stored in memory **105** as a jpg file for one or more of a plurality of image files for graphical map(s), and also stored in memory **105** as a png file for one or more of a plurality of additional image files for additional graphical map(s) stored in memory **105**.

In an embodiment, the graphical map stored in memory 105 and caused to be displayed on display **127** by processor **103** includes the at least one sampling location **1** of facility **3**. In an example, the processor **103** causes the responsive spatial data to be displayed as a graphical map of the room **9** to the user **15**, with the graphical map including the sampling location(s) **1** of the respective room **9**. In one embodiment, method **200** includes a step **418** by which processor **103** causes the graphical map to be displayed to user **15** as a portion of the GUI. In an example, the processor **103** causes the GUI and the graphical map to be displayed to user **15** concurrently on the display **127**.

In an embodiment, processor **103** causes responsive spatial data to be displayed on display **127** as graphical maps of user **15**-selected spatial tiers. So, for example, a facility map shows areas, but not room(s) **9** and/or sampling location(s) **1.** In the example, an area map shows room(s) **9**, but not other area(s) **7** and/or sampling location(s) **1**, while a room map shows sampling location(s) **1**, but not other area(s) **7** and/or other room(s) **9.**

In an embodiment, method **200** includes a step **416** by which processor **103** loads the spatial data to and/or from memory **105**. The spatial data corresponds to at least a subset of the plurality of spatial tiers of the facility **3.** In an example, the device **180** is provided to the user **15** at step **203** pre-loaded with the spatial data stored in, and accessible by processor **103**, from memory **105**. In an example, the spatial data includes one or more graphical maps for one or more of the plurality of spatial tiers of the facility **3.** In the example, the step **207** of causing, by processor **103**, the one or more graphical maps to be displayed to user **15** includes displaying the graphical map(s) to the user **15**. In this case, the graphical map(s) displayed to user **15** on display **127** include textual labels and/or graphical labels for at least a subset of the plurality of spatial tiers of the facility **3**. In one embodiment, step **418** of method **200** includes causing, by processor **103**, the GUI and the graphical map(s) to be displayed to user **15** as a portion of the GUI. In an example, the processor **103** causes the GUI and the graphical map(s) to be displayed to user **15** concurrently on the display **127**. In another embodiment, step **418** of method **200** includes causing, by processor **103**, at least one of: the graphical map and the user instructions, to be displayed to user **15** as a portion of the GUI on the display **127.**

Step **209**: Receiving an indication that user **15** arrived at sampling location(s) **1.**

Referring to **FIG. 9****,** in an embodiment, step **412** of method **200** includes causing, by processor **103**, the GUI to be displayed on the display **127.** In the embodiment, the arrival indication at step **209** is received from user **15** via the GUI. In another embodiment, the arrival indication at step **209** is received by processor **103** through an automated process including, for example and without limitation, device **180** being positioned with a predetermined distance of sampling location **1** as, for instance, detected using location sensing and/or triangulation of signal transmitted by RFID transmitter(s) **12** and related means, as described herein.

Step **210**: Loading the device recipe for particle sampling and/or particle analysis from memory **103.**

Referring to **FIG. 9****,** in an embodiment, step **210** includes loading the device **180** recipe according to the at least one sampling location **1** corresponding to the indication received by the processor **103** at step **209**. In an example, the device **180** is provided to the user **15** at step **203** pre-loaded with at least one recipe stored in, and accessible by processor **103**, from memory **105** for at least a subset of the facility **3** sampling location(s) **1.**

Step **211:** Storing particle sample data for sampling location(s) **1** in memory **105** in association with the sampling location(s) **1** and/or unique identifiers.

Referring still to **FIG. 9**, in an embodiment, step **211** includes storing the particle sample data in memory **105** in association with an identifier of the one of the plurality of spatial tiers containing the sampling location(s) **1** (e.g., a name of the room **9** containing the sampling location(s) **1).** In another embodiment, step **211** includes storing in memory **105** the particle sample data in memory **105** in association with an identifier of the user **15** operating device **180** for purposes of the particle sampling and/or analysis at the sampling location(s) **1.** In yet another embodiment, step **211** includes storing the particle sample data in memory **105** in association with a time and date at which the user **15** performed the sampling and/or analysis at the at least one sampling location **1** with the device **180.**

Referring now to **FIG. 10**, method **200** includes a step **502** by which processor **103** transmits (e.g., via transceiver **137** and/or using a wired line connection) the particle sample data to a location **504** remote from device **180** and/or remote from facility **3**. In one embodiment, step **502** facilitates implementation of a monitoring step **506** in method **200**. In a use case, user **15** may position device **180** in one sampling location **1** in one room **9** of a facility **3** and leave it there for a predetermined amount of time for device **180** to sampling and/or analyze air proximal the particular sampling location **1.** In an example, device **180** periodically transmits sample data and/or other useful and pertinent information to a remote location for storage and monitoring purposes. In such cases, user **15** is freed up to perform other useful tasks in facility **3**, such as being provided with another device **180** to performing sampling and/or analysis in a second room **9** of the facility **3**, according to the various embodiments and examples disclosed herein.

In another embodiment, step **502** facilitates implementation of an archiving step **508** in method **200.** Thus, for example, sample data and/or other useful and pertinent information obtained and stored according to the present disclosure may be backed up so that if device **180** were to malfunction, the data would not be lost. In yet another embodiment, step **502** facilitates implementation of both the monitoring **506** and archiving **508** steps in method **200.**

Still referring to **FIG. 10**, in an embodiment, the device **180** includes a first device **180a** and at least a second device **180b.** In the embodiment, method **200** may further include a step **510** by which at least one of: the spatial data of the facility **3**, the device **180** recipe for the sampling and/or analysis, and an identifier of the user **15**, is exported **510** from the first **180a** to the at least a second device **180b**, or vice versa. In an embodiment, method **200** may include a step **511** by which at least one of: the spatial data of the facility **3**, the device **180** recipe for the sampling and/or analysis, and an identifier of the user **15**, is imported **511** from the at least a second device **180b** to the first device **180a**, or vice versa.

### Example 4: Graphical User Interface Embodiments.

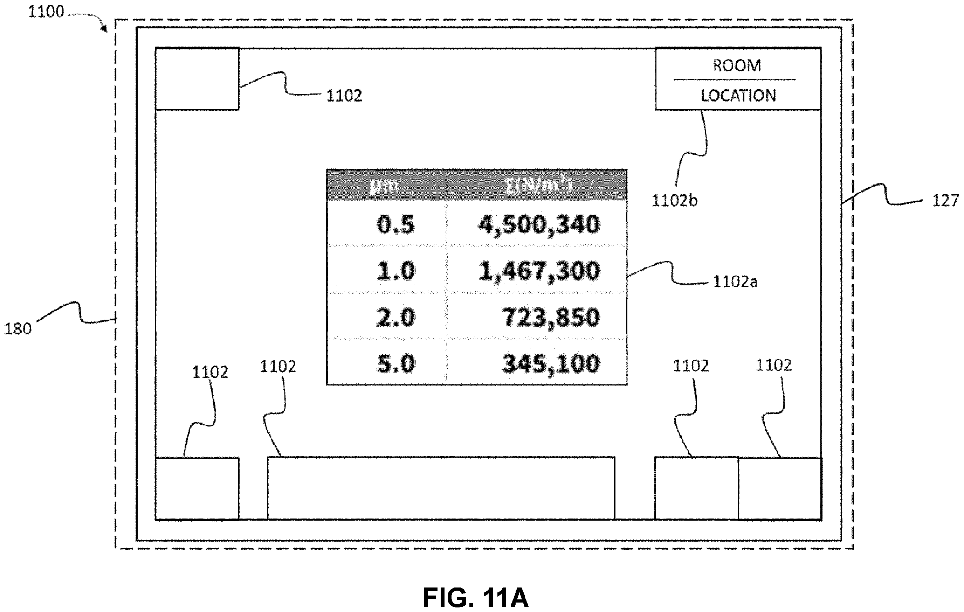

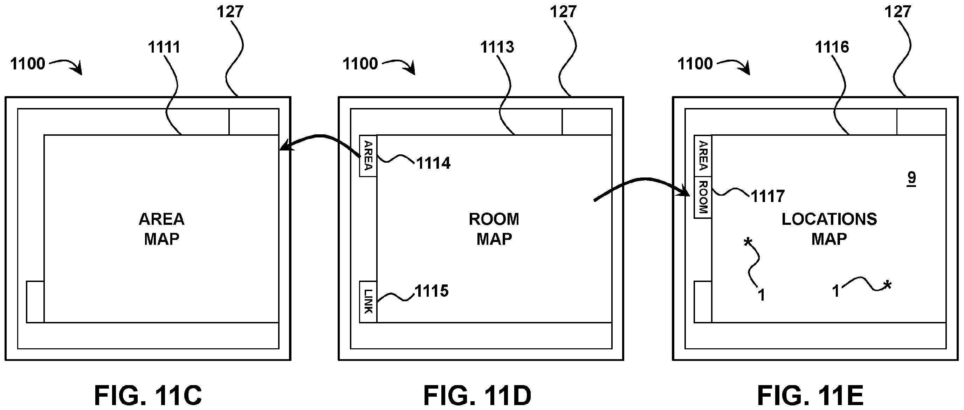

**FIGs. 11A-11D** illustrate screens of a graphical user interface (GUI) **1100** presented to users **15** of device **180** via display **127**, according to some embodiments of the disclosure. The map feature of device **180** described above with reference to Example 3 provides support for the following map types: facility maps, area maps, and room maps. At least one Facility map is available with the map feature of device **180**. It shows and allows selections of Areas 7 within a facility **3**.

In **FIG. 11A**, a main screen of **GUI 1100** including graphics **1102** is shown. Graphics **1102** may be touched or otherwise interacted with by user **15** to effect changes in what is currently being displayed to user **15** via GUI **1100.** In an embodiment, the processor 103 causes a sample information graphic **1102a** to be displayed to user **15** via the GUI **1100.** Graphic **1102a** may include sample data and unique identifier(s) for one or more particle samples analyzed by device **180** from sample(s) recently taken (e.g., for a predetermined number of samples and/or from a predetermined historical time period). In one embodiment, a graphic **1102b**, when touched or otherwise interacted with by user **15,** opens a drop down list from which user **15** may select maps to be displayed for facility **3** spatial tier(s), as desired. In an example, user **15** may select a map of facility **3** to be displayed from the drop down list from graphic **1102b**. The facility map shows area(s) **7** of facility **3**. In another example, from the drop down list, user **15** may select a map of a particular area **7** from the drop down list of graphic **1102b** and/or from by touching or otherwise interacting with the area **7** as shown in the facility map being displayed to him or her on display **127**. In yet another example, from the drop down list, user **15** may select a map of a particular room **9** to be displayed from the drop down list from graphic **1102b** and/or by touching or otherwise interacting with the room **9** as shown in the area map being displayed to him or her on display **127.** In one embodiment, from the room map **9** and/or from the drop list of graphic **1102b,** the user **15** may also view the sampling location(s) **1** of the particular room **9** being displayed to him or her on display **127.** Additionally, or instead, the sampling location(s) **1** shown on respective room maps may be touched or otherwise interacted with by user **15.**

In an example, not shown in **FIG. 11A**, an as-displayed facility map **1101** on GUI **1100** shows the locations of the area(s) **7** (e.g., a first area and a second area adjacent to the first area) and/or room(s) **9** (e.g., five rooms **9**) of the facility **3.** In an embodiment, not shown in **FIG. 11A**, the facility map includes textual and/or graphical identifiers inside and/or proximal to the area(s) **7** and/or room(s) **9** displayed to user **15** as, for example, a floorplan on facility map. In the disclosed embodiments, the facility, area, and/or map(s) which processor **103** causes to be displayed on GUI **1100** in response to user **15** interactions therewith as described herein thus facilitates the user **15** navigating through facility **3** to sampling location(s) **1.**

In an example, user **15** touching a portion the currently displayed map and/or a portion of drop down list of graphics **1102b** enables user **15** to navigate to other (e.g., zoomed-in for additional detail) maps for area(s) **7** and/or room(s) **9** of facility. In another example, user **15** touching a portion of graphics **1102b** causes processor **103** to display a drop down box to user **15** on the GUI **1100.** For instance, in an embodiment, a user **15** touches the portion of graphics **1102b** displaying the word "room", which, via processor **103**, causes the GUI **1100** to display a drop down listing of the five rooms **9** of facility **3.** With the drop down list of rooms **9** so-displayed on GUI **1100**, user **15** touching the textual and/or graphical indicator displayed on the drop down list for one of the rooms **9** causes processor **103** processor **103** to display a detailed map on display **127** for that room **9**. Similarly, user **15** may zoom to more detailed views of any of the areas **7** by touching that portion of graphics **1102b** and proceeding to interact with GUI **1100** in like manner as described above for rooms **9**. Likewise, user **15** may zoom to more detailed views of displaying the sampling location(s) **1** within particular rooms **9** by touching that portion of graphics **1102b** and proceeding to interact with **GUI 1100** in like manner as described above for rooms **9** and areas **7.**

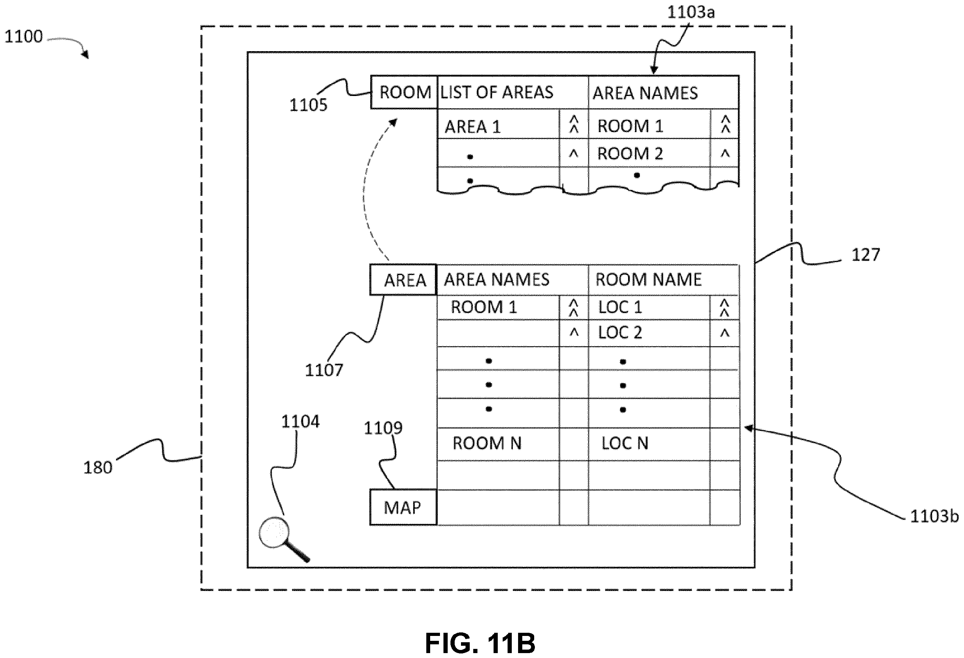

**FIG. 11B** illustrates examples of the aforementioned drop-down lists for areas **7**, rooms **9**, and sampling locations **1**, which processor **103** may cause, in response to user **15** interaction with the GUI **1100**, to display on the display **127** of device **180** to facilitate user **15**'s navigation to the sampling locations **1** for performance of tasks employing device **180**. In the example illustrated in **FIG. 11B****,** the listing of areas **7,** rooms **9**, and sampling locations **1** is a drop down list **1103** which the user **15** may interact with directly via touching display **127** at appropriate locations on the GUI **1100** and/or using another I/O device **112** (e.g., mouse/cursor-clicking interaction) with display **127**.

**FIG. 11B** depicts two drop down lists **1103.** A first drop down list **1103a** lists the room(s) **9** present within particular area(s) **7** of facility **3**, and a second drop down list **1103b** lists the sampling location(s) **1** present within particular room(s) **9**. In an embodiment, the drop down list(s) **1103** of areas **7**, rooms **9**, and/or sampling locations **1** in facility **3** may occupy the entirety, or a majority, of display **127.** In such embodiments, **GUI 1100** may include graphics displayed on **GUI 1100** as a touch button **1104** that may be touched or otherwise interacted with by user **15** to cause, via processor **103**, alternately expanding and contracting the size of drop-down list **1103** to occupy greater and lesser areas of display **127**, respectively. When the drop-down list **1103** is in the contracted state, user **15** may interact with other portions of GUI **1100**, as desired.

As shown in **FIG. 11B****,** the drop down list(s) **1103** include accompanying graphics displayed on the GUI **1100** in the form of attached buttons. In an embodiment, the first drop down list **1103a** includes a first spatial tier button **1105.** User **15** touching button **1105** causes, via processor **103**, **GUI 1100** to display the second drop down listing **1103b.** In the embodiment, the second drop down listing **1103b** is not displayed on **GUI 1100** unless user **15** touches or otherwise interacts with the first spatial tier button **1105.** In an embodiment, the second drop down list **1103b** includes a second spatial tier button **1107**. With second drop down listing **1103b** displayed on GUI **1100**, user **15** touching button **1107** causes, via processor **103**, GUI **1100** to stop displaying the second drop down listing **1103b**, and display only first drop down listing **1103a** on GUI **1100**. In the example shown in **FIG. 11B****,** the first drop down listing **1103a** continues to be displayed on GUI **1100** after user **15** touching first button **1105** causes, via processor **103**, **GUI 1100** to display second drop down listing **1103b.** In another example, not shown in **FIG. 11B****,** user **15** touching first button **1105** causes, via processor **103**, second drop down listing **1103b** to be displayed on **GUI 1100** and also causes GUI **1100** to stop displaying first down listing **1103a** on GUI **1100.**

Still referring to **FIG. 11B****,** in an embodiment, the second drop down list **1103b** includes a map button **1109.** User **15** touching button **1109** causes, via processor **103**, GUI **1100** to display the map corresponding to the room 9 selected (e.g., highlighted) by the user **15** on the second drop down listing **1103b** on or at a portion thereof displaying a textual and/or graphical indicator for the respective room **9.** In a use case, the user **15** has utilized the maps feature of device **180** to navigate to an area **7** (e.g., denoted as "AREA 1" in **FIG. 11B**) in facility **3**, and then to a room **9** (e.g., denoted "ROOM 1" in **FIG. 11B**) in the area 7. Upon entering ROOM 1, the user **15** touches first spatial tier button **1105** on GUI **1100** to display the second drop down listing **1103b.** User **15** desires to navigate with device **180** to one of the sampling locations **1** (e.g., denoted "LOC 1" in **FIG. 11B**) in ROOM 1, and so touches the portion of the second drop down listing **1103b** having the textual and/or graphical indicator for LOC 1 in ROOM 1. In one embodiment, this action of the user **15** causes, via processor **103**, the **GUI 1100** to highlight that portion of second drop down listing **1103** on GUI **1100** corresponding to LOC1. The user **15** then touches the map button **1109**, which causes, via processor **103**, the room map for ROOM 1 to be displayed on GUI **1100** and, optionally, causes the second drop down listing **1103b** to stop being displayed on the GUI **1100.** In another embodiment, the user **15** touching the portion of the second drop down listing **1103b** having the textual and/or graphical indicator for LOC 1 in ROOM 1 causes the GUI **1100** to immediately display the room map for ROOM 1. For either scenario in this use case, the GUI **1100**-displayed room map for ROOM 1 may have the map position for LOC 1 and, optionally, for all other sampling location(s) **1** in ROOM 1, displayed using textual and/or graphical indicators, which facilitates user **15** navigating thereto.

Facility Maps, Area Maps, and Room Maps-For use of device **180** in facilities **3** having numerous areas **7** and rooms **9**, the map feature of device **180** provides the requisite number of area maps and room maps, along with corresponding sampling locations **1** in area(s) **7** and/or room(s) **9**, to meet operational needs of users **15**. **FIGs. 11C-11E** depict examples of an area map **1111**, a room map **1113**, and an annotated room map **1116** having sampling location(s) **1** displayed concurrently therewith.

User **15** may cause, via processor **103**, the GUI **1100** to display the area map **1111** from a facility map view by, for example, interacting with graphics **1102** on the GUI **1100**, as described above with reference to **FIGs. 11A** and **11B**. Area map **1111** facilitates user **15** navigation to particular room(s) **9** in the area **7.** Upon reaching the desired room **9**, user **15** may cause, via processor **103**, GUI **1100** to display the room map **1113** from the area map **1111** view by for example, interacting with the first drop down list **1103a** shown and described above with reference to **FIG. 11B**. In an example, processor **103** causes GUI **1100** to display a link button **1115** concurrently with the room map **1113**. In the example, upon entering the respective room **9**, and with the room map **1113** being displayed to user **15**, user **15** may cause, via processor **103**, GUI **1100** to display the annotated room map **1116** by touching and/or otherwise interacting with GUI **1100** to actuate the link button **1115**. In another example, user **15** may cause, via processor **103**, GUI **1100** to display the annotated room map **1116** using the actions and sequencing of processor **103** steps shown in **FIG. 11B** and described above with reference to the second drop down list **1103b.** In an embodiment, processor **103** causes **GUI 1100** to display an area button **1114** concurrently with the room map **1113.** In the example, user **15** may cause, via processor **103**, GUI **1100** to display the area map **1111** and, optionally, to stop displaying the room map **1113**, by touching and/or otherwise interacting with GUI **1100** to actuate the area button **1114.** Similarly, processor **103** may cause GUI **1100** to display a room button **1117** and, optionally, the area button **1114,** concurrently with the annotated room map **1116.** In an embodiment, user **15** may cause, via processor **103,** GUI **1100** to display the room map **1111** and, optionally, to stop displaying the annotated room map **1116,** by touching and/or otherwise interacting with GUI **1100** to actuate the room button **1117.**

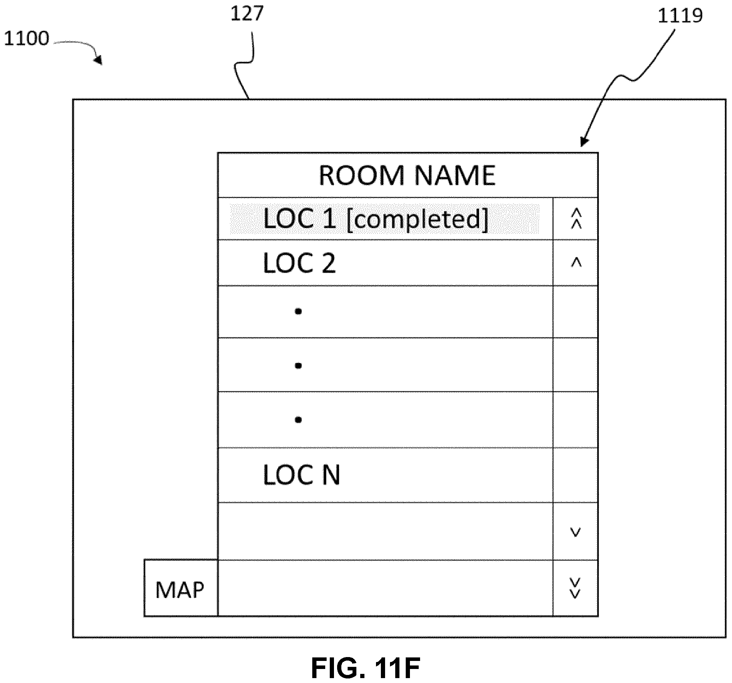

**FIG. 11F** illustrates an example a multi-location sampling and/or analysis listing **1119** displayed on GUI **1100** as text and/or graphical indicators. In an embodiment, listing **1119** provides a plurality of sampling location **1** indicators. In an embodiment, listing **1119** is included in, and displayed via processor **103** operations to user **15** on **GUI 1100** as, a drop down listing. In another embodiment, listing **1119** occupies all or part of display **127** on the GUI **1100**. In an example, processor **103** causes listing **1119** to be displayed on GUI **1100** concurrently with map button **1109**, which may include the same or similar functionality as shown and described above with reference to **FIG. 11B**. In a use case, user **15** may utilize listing **1119** on GUI **1100** to catalog and/or otherwise record and keep track of progress in sampling- and/or analysis-related tasks and completion status thereof for multiple sampling locations **1** in a particular room **9.** In an example, the textual and/or graphical indicator corresponding to respective sampling location(s) **1** having been sampled and/or analyzed by, for example and without limitation, device **180**, are caused to be displayed by processor **103** on GUI **1100** in listing **1119** with a changed appearance (e.g., highlighted, bolded, starred, circled, etc.) upon their being completed and upon their respective sample data being stored by processor **103** in memory **105** in association with their respective unique identifiers including the sampling location **1**.

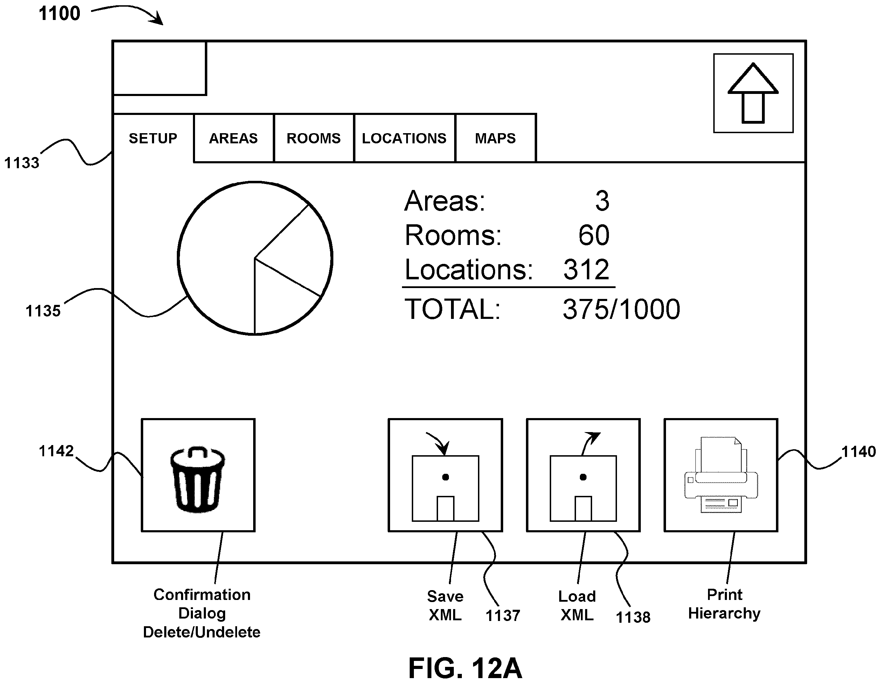

**FIGs. 12A-12F** illustrate configuration screens of the device **180** GUI **1100** and a web-based tool for use in configuring device **180** map features with requisite spatial tiers (e.g., facility **3**, area(s) **7**, and room(s) **9**) along with sampling location(s) **1**, according to some embodiments of the disclosure. **FIG. 12A** shows a setup tab **1133.** Tab **1133** provides user **15** overall control of the location features of device **180**, as shown and described above with reference to **FIGs. 11A-11F****.** In an embodiment, processor **103** causes an indication (e.g., a pie chart **1135,** representing, for instance, a number of locations (e.g., area(s) **7,** room(s) **9**, and/or sampling location(s) **1** of facility **3**) that may be stored in memory **105**. Thus, in the example illustrated in **FIG. 12A**, memory **105** may store a total of 1000 such locations, and tab **1133** shows, via pie chart **1135,** that 375 of them are currently being used, leaving 625 available to user **15.** Processor **103** may cause one or more buttons to be displayed on GUI **1100** in tab **1133** User **15** touching a save button **1137** on **GUI 1100** causes processor **103** to save location configuration files in memory **105.** User **15** touching a load button **1138** on GUI **1100** causes processor **103** to load location configuration files from memory **105.** User **15** touching a print button **1140** on **GUI 1100** causes processor **103** to provide data to an attached printer to print a hierarchy of spatial data (e.g., map images with or without sampling location(s) **1**) for facility **3** and/or a hierarchical listing of sampling location(s) **1** therein. User **15** touching a delete button **1142** on **GUI 1100** causes processor **103** to display a confirmation dialog box graphic (not shown in **FIG. 12A**) which, when confirmed by user **15**, causes processor to delete configuration files from memory **105**.

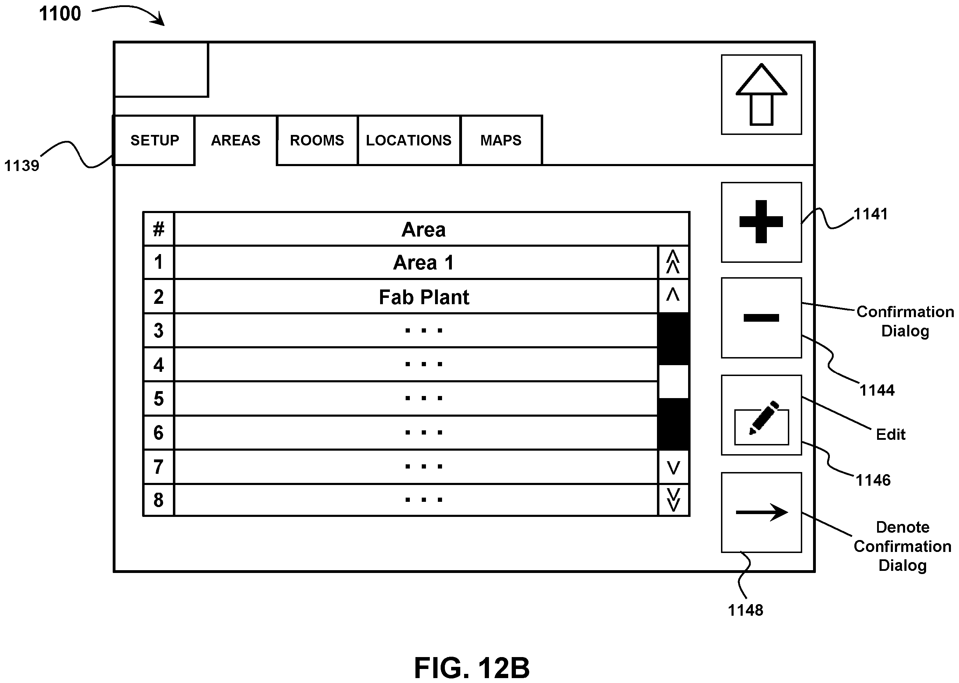

**FIG. 12B** shows a textual configuration tab **1139**. Tab **1139** enables user **15** to configure text to be displayed on maps and other features of GUI **1100** and/or to be stored as metadata for unique identifier(s) in association with sample data, as described above with reference to method **200.** Processor **103** may cause one or more buttons to be displayed on **GUI 1100** in tab **1139**. User **15** touching an add button **1141** on GUI **1100** causes processor **103** to add a spatial tier and/or sampling location 1 to be made available for user **15** textual configuration. User **15** touching a remove button **1144** on GUI **1100** causes processor **103** to display a confirmation dialog box graphic (not shown in **FIG. 12B**) which, when confirmed by user **15**, causes processor to delete a prior configured spatial tier and/or sampling location **1** from memory **105.** User **15** touching an edit button **1146** on GUI **1100** causes processor **103** to open a prior configured spatial tier and/or sampling location **1** to be made available from memory **105** for editing by user **15**. After being so edited, user **15** touching a confirmation button **1148** causes processor **103** to open an edit confirmation dialog box (not shown in **FIG. 12B**) which, when confirmed by user **15**, causes processor **103** to save the edited textual configuration file in memory **105**.

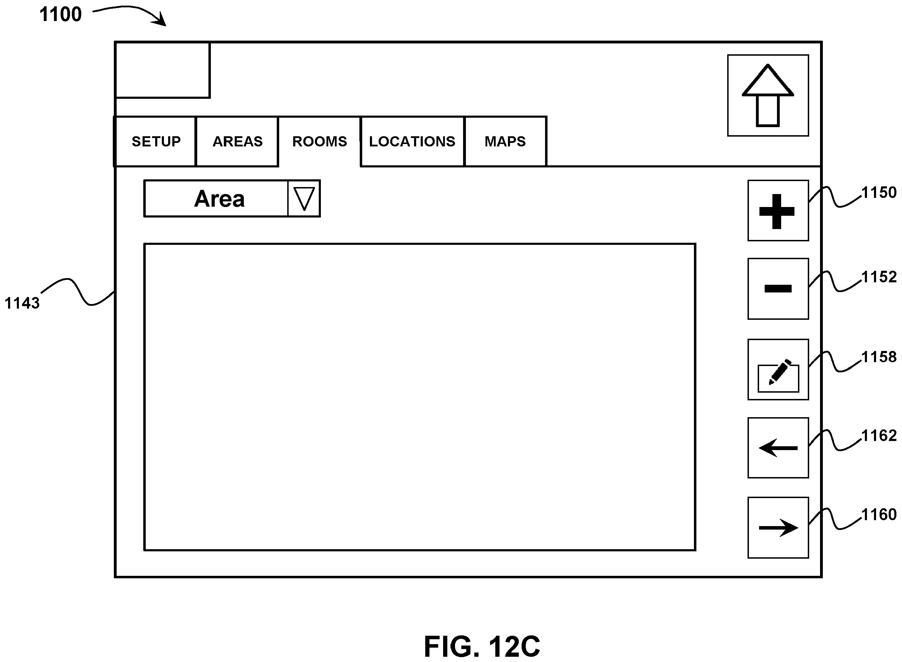

**FIG. 12C** shows a map configuration tab **1143.** Tab **1143** enables user **15** to configure the map features of device **180.** For example, tab **1143** is employed by user **15** to add room(s) **9** to area **7** map(s). Processor **103** may cause one or more buttons to be displayed on GUI **1100** in tab **1143.** User **15** touching an add button **1150** on **GUI 1100** causes processor **103** to add a map file to be made available for user **15** configuration. User **15** touching a remove button **1152** on **GUI 1100** causes processor **103** to display a confirmation dialog box graphic (not shown in **FIG. 12C**) which, when confirmed by user **15**, causes processor to delete a prior configured map file from memory **105**. User **15** touching an edit button **1158** on **GUI 1100** causes processor **103** to open a prior configured map file to be made available from memory **105** for editing by user **15.** After being so edited, user **15** touching a confirmation button **1160** causes processor **103** to open an edit confirmation dialog box (not shown in **FIG. 12C**) which, when confirmed by user **15**, causes processor **103** to save the edited map file in memory **105**. User **15** touching an undo button **1162** on GUI **1100** causes processor **103** to revert back to the prior stored configured map file thus undoing any changes made to it.

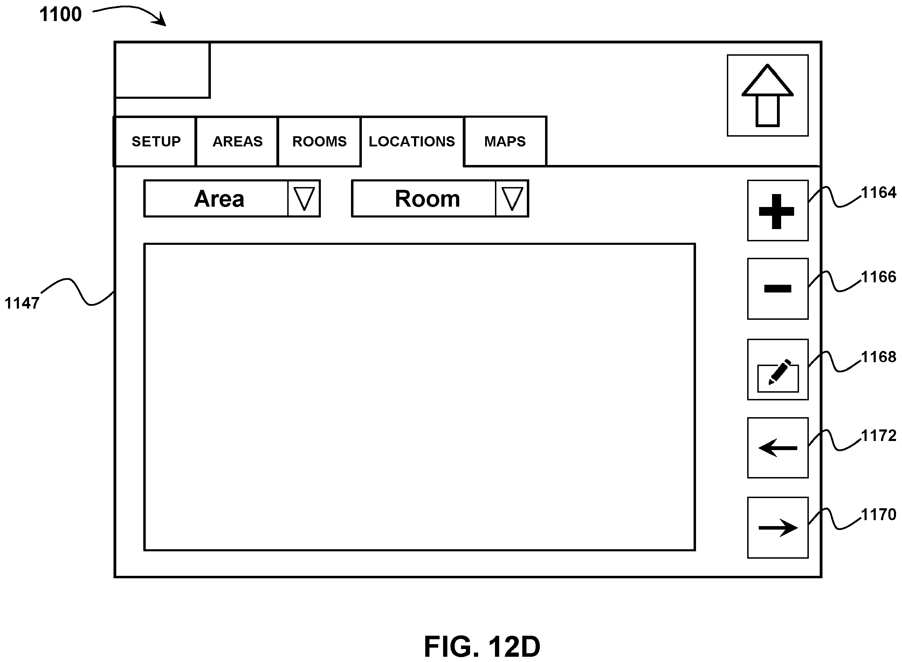

**FIG. 12D** shows a sampling location configuration tab **1147.** Tab **1147** enables user **15** to add locations to a specific spatial tier maps of facility **3.** For example, tab **1143** is employed by user **15** to add sampling location(s) **1** to a specific room **9** within a defined area **7.** Processor **103** may cause one or more buttons to be displayed on **GUI 1100** in tab **1147.** User **15** touching an add button **1164** on **GUI 1100** causes processor **103** to add a map file to be made available for user **15** configuration. User **15** touching a remove button **1166** on GUI **1100** causes processor **103** to display a confirmation dialog box graphic (not shown in **FIG. 12D****)** which, when confirmed by user **15,** causes processor to delete a prior configured sampling location **1** from memory **105.** User **15** touching an edit button **1168** on **GUI 1100** causes processor **103** to open a prior configured sampling location **1** file to be made available from memory **105** for editing by user **15.** After being so edited, user **15** touching an auto-populate button **1170** causes processor **103** to automatically create a plurality of names of sampling locations **1** (e.g., "Location 001," "Location 002," etc.) for a particular room **9.** User **15** touching an undo button **1172** on GUI **1100** causes processor **103** to revert back to the prior stored configured sampling location **1** file thus undoing any changes made to it.

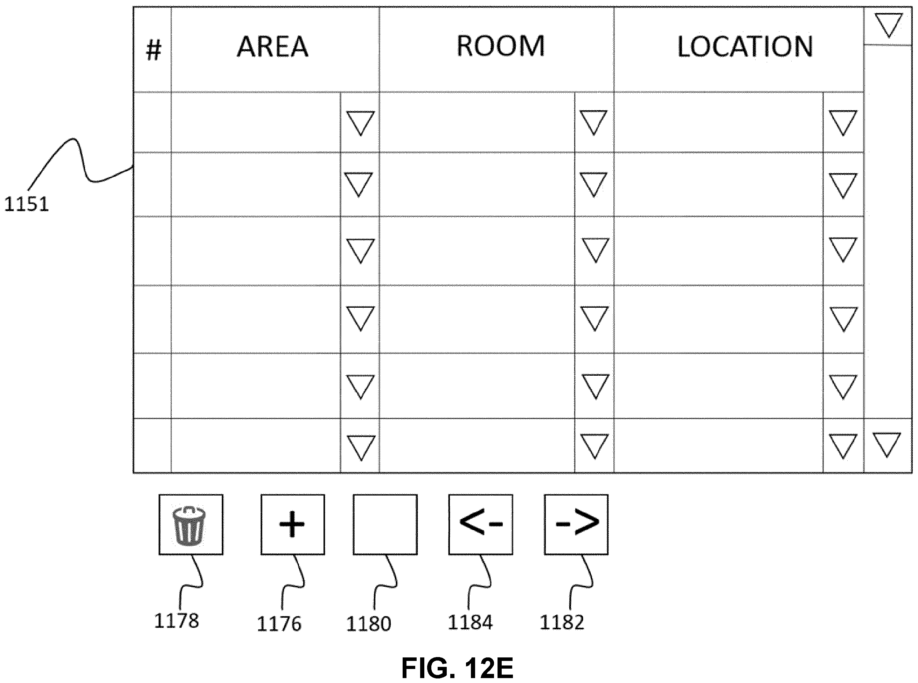

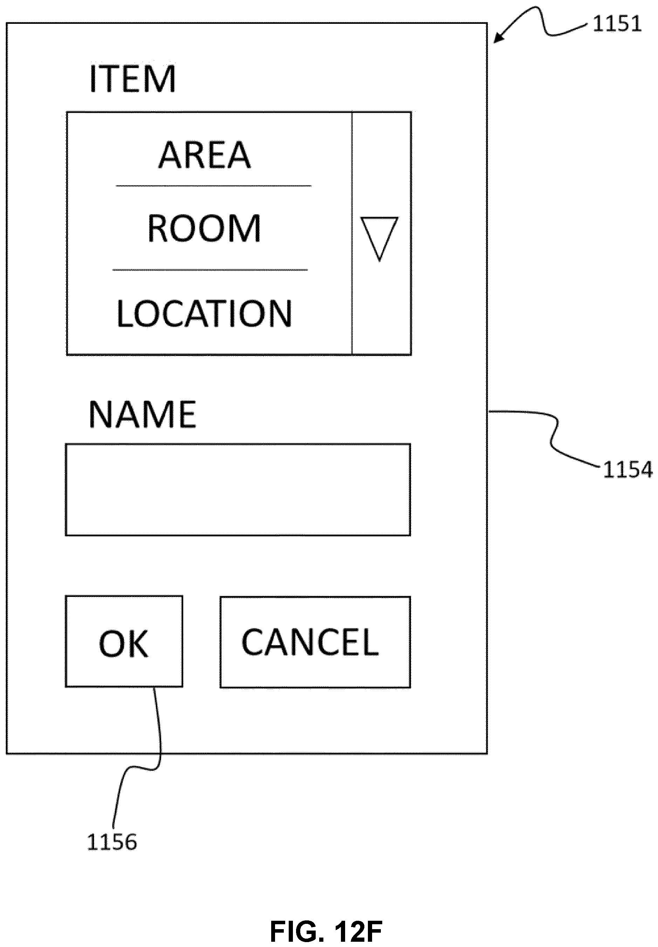

**FIG. 12E** shows a Web page interface **1151** for device 180. interface **1151** enables user **15** to edit the names of area(s) **7,** room(s) **9**, and sampling location(s) **1** within a facility **3.** Interface **1151** provides the same or similar functionality as GUI **1100,** but user **15** is able to emulate, for example, textual configuration tab **1139,** and/or configure additional or other various features of device **180,** as described above, but without having the device **180** in hand. For instance, web interface **1151** may include buttons. User **15** clicking on interface **1151** at an add button **1176** causes interface **1151** to add a spatial tier and/or sampling location **1** to be made available for user **15** textual configuration. User **15** clicking on interface **1151** at a remove button **1178** causes interface **1151** to display a confirmation dialog box graphic (not shown in **FIG. 12E**) which, when confirmed by user **15,** causes processor **103** to delete a prior configured spatial tier and/or sampling location **1** from memory **105.** User **15** clicking on interface **1151** at an edit button **1180** causes processor **103** to open and display, via interface **1151,** a prior configured spatial tier and/or sampling location **1** to be made available from memory **105** for editing by user **15.** After being so edited, user **15** clicking on interface **1151** at a confirmation button **1182** causes interface **1151** to open an edit confirmation dialog box (not shown in **FIG. 12E**) which, when confirmed by user **15,** causes processor **103** to save the edited textual configuration file in memory **105.** User **15** clicking on interface **1151** at an undo button **1184** causes processor **103** to revert back to the prior stored configured map file thus undoing any changes made to it. **FIG. 12F** shows a pop-up dialog **1154** on interface **1151** for adding a location. Pull down menus of areas and rooms are provided. The user **15** selects the area, then the room, then types in a location name and clicks an OK button **1156,** which causes this new location is added to the chosen room and area.

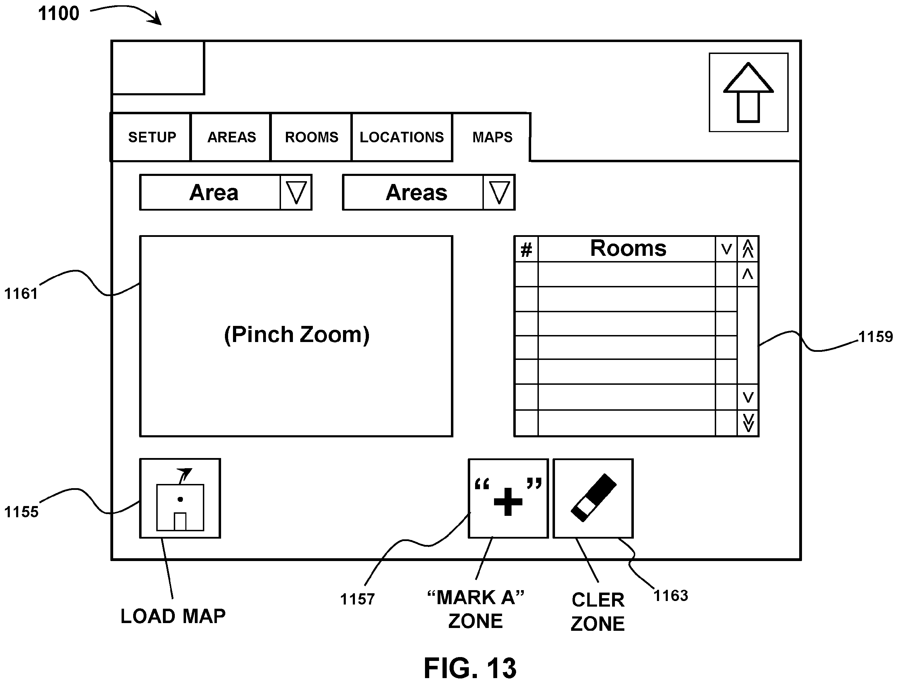

**FIG. 13** illustrates a screen of the device **180** GUI **1100** for use in additional aspects of configuring and editing the device **180** map features, according to an embodiment of the disclosure. **FIG 13** further illustrates how maps are loaded and configured on the instrument (e.g., device **180**). **FIG. 13** illustrates how an area map may be loaded onto device **180** and then configured with touch-points for rooms **9.** A JPG or PNG image file of the area **7** is loaded via the "Load Map" button **1155.** In an example, the user **15** loads an externally generated file onto the device **180** via a USB FLASH key (or a file is loaded via the browser interface **1151** implementation). To add Rooms to the area map, first a mark zone button **1157** button is touched. Then a Room is selected (i.e. touched) from the named list **1159** on the right side of the **GUI 1100** screen. Finally, an appropriate location on the map **1161** on the left side of the GUI **1100** screen is touched. A Clear Zone button **1163** is provided to unmark a zone on the map.

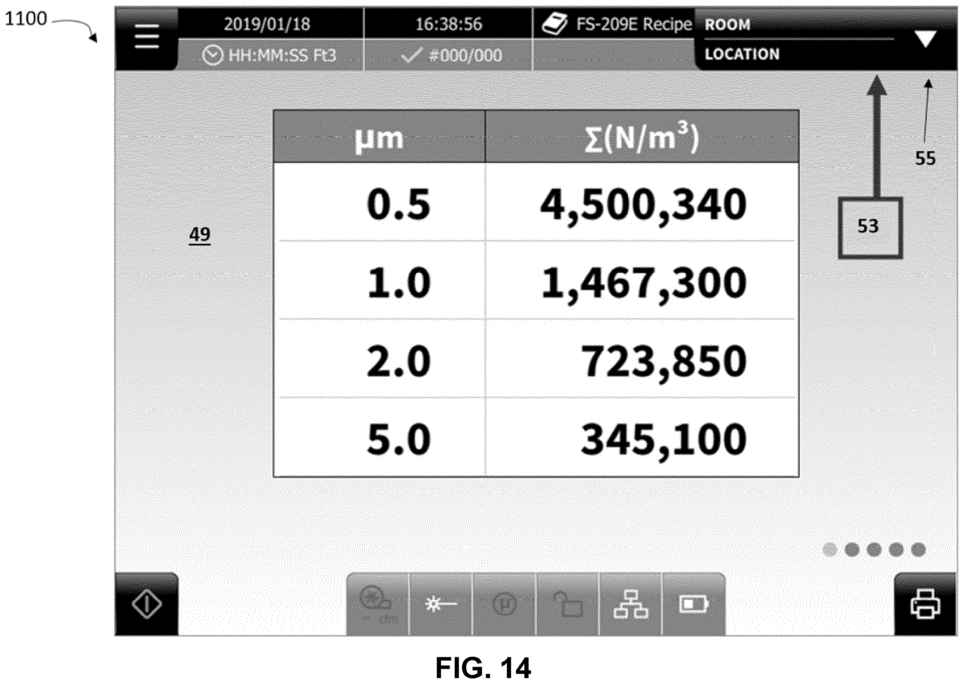

**FIGs. 14-17** illustrate examples the device **180** GUI **1100** and/or web-based interfaces and tools for use in additional aspects operation of device **180,** including configuring and editing the device **180** map features, according to some embodiments of the disclosure.

Referring to **FIG. 14****,** a main screen **49** of the GUI **1100** may include a pull-down location selector graphic **53.** In one embodiment, graphic **53** is displayed in a form and/or operates in the same or similar manner, as graphic **1102,** as shown and described above with reference to **FIG. 11A****.** In the example shown in **FIG. 14** graphic **53** In a closed state shows the current room 9 and sampling location 1 within that room **9.** When user **15** touches or otherwise interacts with the arrow **55** displayed in GUI **1100**, this causes the GUI **1100** to open a pair of list boxes (not shown in **FIG. 14****)** with functionality allowing user **15** to select the area **7,** room **9,** and sampling location(s) **1** in either a text form or via displayed maps including, without limitation, those shown and described above with reference to **FIGs. 1** and **3****.** In one embodiment, the aforementioned list boxes displayed by GUI **1100** upon user **15** touching or otherwise interacting with arrow **55** are displayed in a form and/or operate in the same or similar manner, as first **1103a** and/or second **1103b** drop down lists, as shown and described above with reference to **FIG. 11B****.**

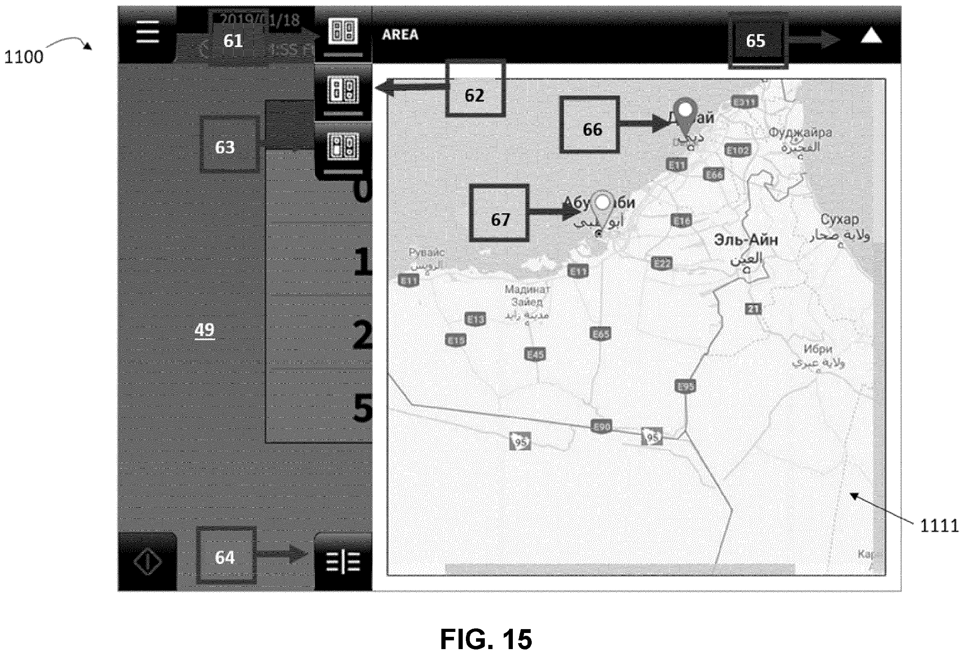

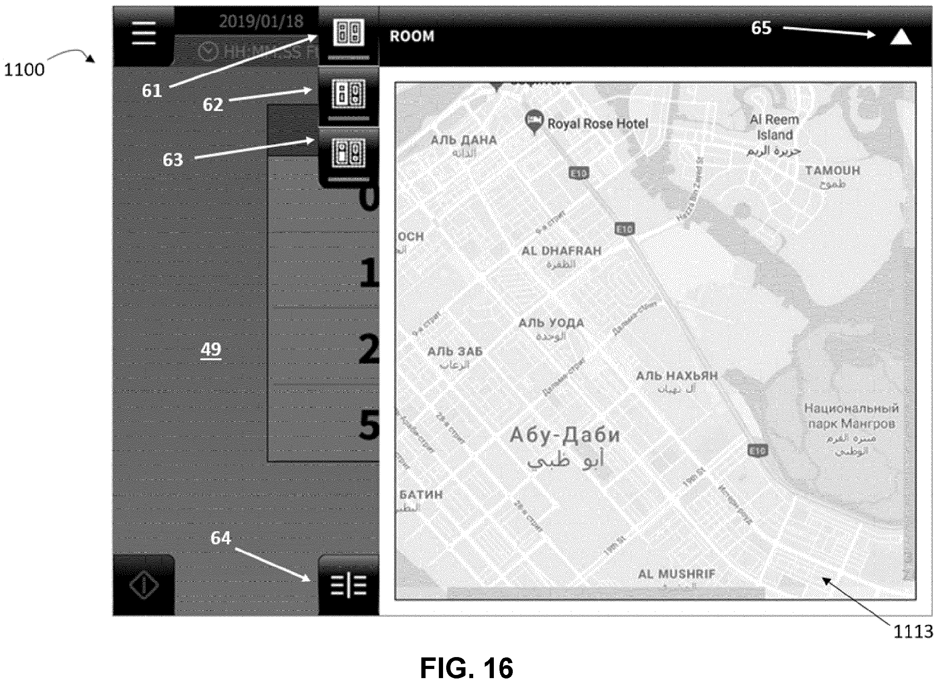

Referring to **FIG. 15****,** the main screen **49** of the GUI **1100** may include an area selection button **61** for selecting an area **7.** In one embodiment, user **15** touching or otherwise interacting with button **61** causes GUI **1100** to display the area map **1111** corresponding to the selection of user **15.** Main screen **49** may include a room selection button **62.** In an embodiment, user **15** touching or otherwise interacting with button **62** causes GUI **1100** to display the room map **1113** corresponding to the selection of user **15.** Main screen **49** may include a sampling location **1**-level selection button **63.** In one embodiment, user **15** touching or otherwise interacting with button **63** causes GUI **1100** to display the annotated room map **1116** corresponding to the selection of user **15.** The resulting changes in the example GUI **1100** shown in **FIG. 15** are illustrated, by way of example, in **FIG. 16****.** A similar change in how **GUI 1100** is displayed occurs upon user touching and/or otherwise interacting with button **63.**

The main screen **49** shown in **FIG. 15** may include a toggle button **64** for enabling user **15** to toggle between maps views and list views (e.g., drop down list(s) **1103a** and/or **1103b**). In an example, toggle button **64** includes graphics displayed as an icon in the form of a map when the GUI **1100** is currently displaying a list view. In the example, toggle button **64** includes graphics displayed as an icon in the form of a list when the GUI **1100** is currently displaying a map view. User **15** touching or otherwise interacting with toggle button **64** causes GUI **1100** to alternately display the map view and the list view corresponding to the map view.

The main screen **49** shown in **FIG. 15** may include a screen selection button **65** for enabling user **15** to toggle between map and/or list view(s) and the main screen **49** view depicted, for example, in **FIG. 14****.** User **15** touching or otherwise interacting with screen selection button **65** causes GUI **1100** to alternately display the map and/or list view and the main screen **49** view without overlain map and/or list view(s). In one embodiment, in cases in which a recipe is associated with a room **9** and/or sampling location **1,** selecting the pin icon **66** to convert it to a selected pin icon **67** further causes processor **103** to load that recipe from memory **103.**

The main screen **49** shown in **FIG. 15** may include a map pin icon **66** concurrently displayed by GUI **1100** with one or more of the map views. In an example, user **15** touching and/or otherwise interacting with map pin icon(s) **66** causes GUI **1100** to change a color and/or otherwise change the displayed appearance of, the map pin icon(s) **66.** In an embodiment, user **15** touching and/or otherwise interacting with map pin icon(s) **66** converts the map pin icon(s) **66** into selected map pin icon(s) **67.** In one embodiment, user **15** touching or otherwise interacting with map pin icon(s) **66** further causes the sampling location(s) 1 corresponding to the selected map pin icon(s) **67** to undergo appearance alteration in listing **1119** and further causes the additional processing and storing steps to be performed by processor **103** and memory **105,** as shown and described above with reference to FIG. **11F****.**

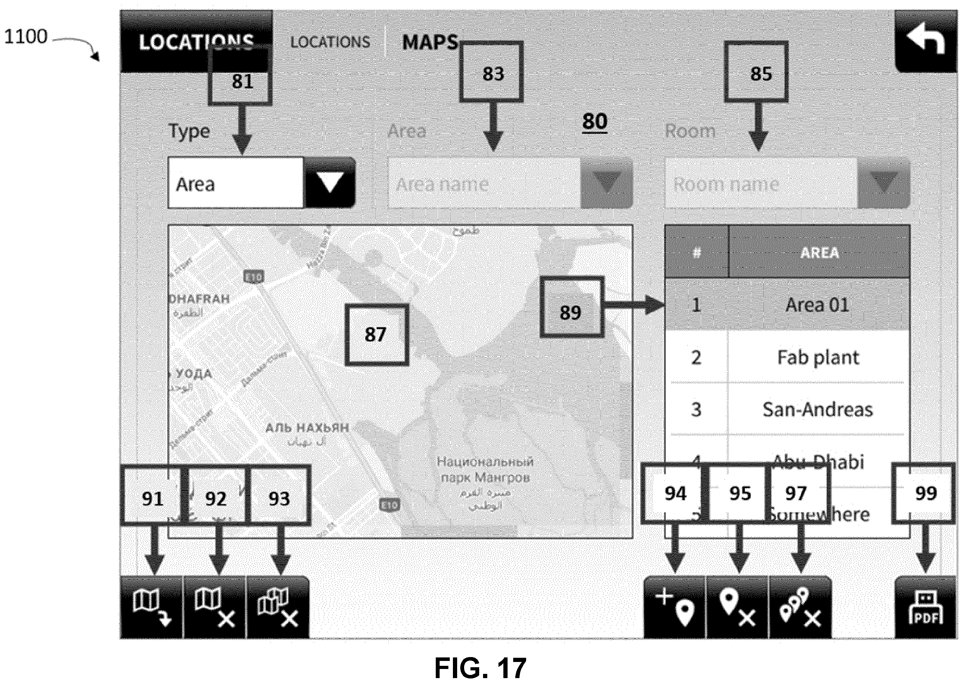

Referring to **FIG. 17****, GUI 1100** may include a map editing screen **80.** Map editing screen **80** includes a type selection drop-down list **81.** Selections available for the user **15** to touch or otherwise interact with in type selection drop-down list **81** include Area, Room or Location. When set to Area, the Facility level map may be added, deleted or edited. When set to Room, then one of several maps which allow selecting adding, deleting or editing room will be displayed. When set to Location, then same capability is provided for maps that have location selections. Map editing screen **80** includes an area name selection drop-down list **83.** When the selection type (e.g., from drop down list **81**) is Area, this control is disabled. When the selection type is Room or Location, then drop-down list **83** allows selecting an Area. Map editing screen **80** includes a room name selection drop-down list **85.** When the selection type (e.g., from drop down list **81**) is Area or Room, this control is disabled. When the selection type is Location, then drop-down list **85** allows selecting a Room.

Map editing screen **80** includes a select map display area **87.** If no map has been loaded from memory **105,** a blank region is shown on display **127.** When the selection type (e.g., from drop down list **81**) is Area, then the Facility level map may be added, deleted or edited. When the selection type (e.g., from drop down list **81**) is Room, then an Area map with Rooms on it may be added, deleted or edited. When the selection type (e.g., from drop down list **81**) is Location, then a Room map with Locations may be added, deleted or edited.

Map editing screen **80** includes a named selection list **89.** This list **89** is populated with either Area names, Room names or Location names. The population type matches the Type selection drop-down (e.g., from drop down list **81**). The items in this list **89** are the existing names which may be "pinned" to points on the appropriate map (e.g., pin icon(s) **66,** as shown and described above with reference to **FIG. 15**). A single selection is provided in the list **89.** The selected item may be pinned to the map (see description of map pin button **94,** below).

Map editing screen **80** includes a load map button **91.** Upon user **15** touching or otherwise interacting with button **91,** button **91** enables user **15** to upload a map to the system (e.g., device **180**) from memory **103.** In an example, the map file is loaded by processor **103** from a USB FLASH key memory **105** form. In other examples, additional and/or other external file interfaces and/or memory **105** forms for map files may be utilized, as described by way of example above with reference to Example 3. Once loaded by processor **103** from memory **105,** the map will be displayed by GUI **1100** as described above with reference to select map display area **87.** If a map is already loaded by processor **103** from memory **105** for the selection, then button **91** may be disabled.

Map editing screen **80** includes a remove map button **92.** Upon user **15** touching or otherwise interacting with button **92,** button **92** enables user **15** to cause **GUI 1100** to stop displaying the currently selected map. In an example, GUI **1100** displays a pop-up window (not shown in **FIG. 17**) on display **127** to confirm the user's **15** desire to remove the map and **GUI 1100** stops displaying the currently selected map only in response to user **15** touching or otherwise interacting with this pop-up window in manner indicative of user's **15** desire to remove the currently selected map from GUI **1100.** Map editing screen **80** includes a remove all maps button **93.** Upon user **15** touching or otherwise interacting with button **93,** button **93** enables user **15** to cause GUI **1100** to stop displaying all maps loaded by processor **103** from memory **105** on display **127.** In an example, GUI **1100** displays a pop-up window (not shown in **FIG. 17**) on display **127** to confirm the user's **15** desire to remove all maps and GUI **1100** stops displaying all the maps only in response to user **15** touching or otherwise interacting with this pop-up window in manner indicative of user's **15** desire to remove all maps from GUI **1100** on display **127.**

Map editing screen **80** includes a map pin button **94.** Upon user **15** touching or otherwise interacting with button **94,** button **94** enables user **15** to cause GUI **1100** to display graphics in the form of a pin on the respective for the highlighted and/or otherwise selected item in the Named Selection list **89.** The point touched and/or otherwise selected via GUI **1100** interaction by user **15** on the map after pressing button **94** will be assigned the current Named Selection. Each selection point on the map will show a pin icon **66.** Therefore, in the embodiment, adding selections to the map is a three step process. First user **15** selects a Name (e.g., from Named Selection list **89**). Second, user **15** presses the map pin button **94.** Finally, user **15** touches the select map display area **87** at the desired point. A new map pin icon **66** is displayed on GUI **1100** once this is done.

Map editing screen **80** includes a map unpin button **95.** Upon user **15** touching or otherwise interacting with button **95,** button **95** enables user **15** to cause GUI **1100** to stop displaying the map pin icon **66** corresponding to the currently selected item in the Named Selection list **89.** In an example, GUI **1100** displays a pop-up window (not shown in **FIG. 17**) on display **127** to confirm the user's **15** desire to remove the respective map pin icon **66** from select map display area **87** and GUI **1100** stops displaying that map pin icon **66** only in response to user **15** touching or otherwise interacting with this pop-up window in manner indicative of user's **15** desire to remove the respective map pin icon **66.**

Map editing screen **80** includes a map unpin all button **97.** Upon user 15 touching or otherwise interacting with button **97,** button **97** enables user **15** to cause GUI **1100** to stop displaying all map pin icons **66** in the select map display area **87.** In an example, **GUI 1100** displays a pop-up window (not shown in **FIG. 17**) on display **127** to confirm the user's **15** desire to remove all the map pin icons **66** in the select map display area **87** and GUI **1100** stops displaying all the map pin icons **66** only in response to user touching or otherwise interacting with this pop-up window in manner indicative of user's **15** desire to remove all the map pin icons **66** in maps from GUI **1100** on display **127.**

Map editing screen **80** includes a Print Map PDF report button **99.** Upon user **15** touching or otherwise interacting with button **99,** button **99** enables user **15** to cause processor **103** to generate and, optionally, store in memory **105** and/or direct transmission of, a PDF report for the at least one of the maps configured as described, by way of example, above. In one embodiment, the PDF report includes images of all maps in the system embedded in the PDF report file including selection points (e.g., map pin icons **66**), and a list of the selection point names (e.g., the Area **7,** Room **9,** and/or Sampling Location **1** names).

The following patent publications relate to particle counting and particle analysis : US Publication Nos. 2019/0250785 and US Publication Nos. 2015/0259723.

The terms and expressions which have been employed herein are used as terms of description and not of limitation, and there is no intention in the use of such terms and expressions of excluding any equivalents of the features shown and described or portions thereof, but it is recognized that various modifications are possible within the scope of the invention as defined by the appended claims. Thus, it should be understood that although the present invention has been specifically disclosed by preferred embodiments, exemplary embodiments and optional features, modification and variation of the concepts herein disclosed may be resorted to by those skilled in the art, and that such modifications and variations are considered to be within the scope of this invention as defined by the appended claims. The specific embodiments provided herein are examples of useful embodiments of the present invention and it will be apparent to one skilled in the art that the present invention may be carried out using a large number of variations of the devices, device components, methods steps set forth in the present description. As will be obvious to one of skill in the art, methods and devices useful for the present methods can include a large number of optional composition and processing elements and steps.

As used herein and in the appended claims, the singular forms "a", "an", and "the" include plural reference unless the context clearly dictates otherwise. Thus, for example, reference to "a cell" includes a plurality of such cells and equivalents thereof known to those skilled in the art. As well, the terms "a" (or "an"), "one or more" and "at least one" can be used interchangeably herein. It is also to be noted that the terms "comprising", "including", and "having" can be used interchangeably. The expression "of any of claims XX-YY" (wherein XX and YY refer to claim numbers) is intended to provide a multiple dependent claim in the alternative form, and in some embodiments is interchangeable with the expression "as in any one of claims XX-YY."

When a group of substituents is disclosed herein, it is understood that all individual members of that group and all subgroups, are disclosed separately. When a Markush group or other grouping is used herein, all individual members of the group and all combinations and sub-combinations possible of the group are intended to be individually included in the disclosure.

Every device, system, formulation, combination of components, or method described or exemplified herein can be used to practice the invention, unless otherwise stated.

Whenever a range is given in the specification, for example, a temperature range, a time range, or a composition or concentration range, all intermediate ranges and subranges, as well as all individual values included in the ranges given are intended to be included in the disclosure. It will be understood that any subranges or individual values in a range or subrange that are included in the description herein can be excluded from the claims herein.

All patents and publications mentioned in the specification are indicative of the levels of skill of those skilled in the art to which the invention pertains.

As used herein, "comprising" is synonymous with "including," "containing," "having," or "characterized by," and is inclusive or open-ended and does not exclude additional, unrecited elements or method steps. As used herein, "consisting of" excludes any element, step, or ingredient not specified in the claim element. As used herein, "consisting essentially of" does not exclude materials or steps that do not materially affect the basic and novel characteristics of the claim. In each instance herein any of the terms "comprising", "consisting essentially of" and "consisting of" may be replaced with either of the other two terms. The invention illustratively described herein suitably may be practiced in the absence of any element or elements, limitation or limitations which is not specifically disclosed herein.

One of ordinary skill in the art will appreciate that analytical methods, assay methods, and biological methods other than those specifically exemplified can be employed in the practice of the invention without resort to undue experimentation. All art-known functional equivalents, of any such materials and methods are intended to be included in this invention. The terms and expressions which have been employed are used as terms of description and not of limitation, and there is no intention that in the use of such terms and expressions of excluding any equivalents of the features shown and described or portions thereof, but it is recognized that various modifications are possible within the scope of the invention as defined by the appended claims.

Thus, it should be understood that although the present invention has been specifically disclosed by preferred embodiments and optional features, modification and variation of the concepts herein disclosed may be resorted to by those skilled in the art, and that such modifications and variations are considered to be within the scope of this invention as defined by the appended claims.

## Claims

1. A method (200) of operating a portable particle sampling device for sampling an environment at a sampling location in a facility, the method comprising the steps of:
- associating a sampling location with a unique identifier, wherein the unique identifier comprises an area and the sampling location;
- selecting the area;
- loading a sampling plan routine (402), wherein the sampling plan routine includes:
the spatial data of the facility; and
text and/or graphics which provide user instructions to a user as to how to operate the device;
- displaying the sampling location associated with the selected area on a graphical user interface (GUI) connected to the device (207), wherein said displaying includes causing spatial data to be displayed as a graphical map to the user; and
- sampling the environment at the sampling location with the device.

2. The method of claim 1, further comprising:
- receiving an indication that the device has arrived at a sampling location; (209) and
- in response to the indication, loading a device recipe (210) for at least one of particle sampling and particle analysis, before sampling the environment at the sampling location with the device.

3. The method of any of claims 1 - 2, further comprising:
- providing the device to a user tasked with the sampling of a facility at the sampling location (203),
wherein the facility has a plurality of spatial tiers including: the area, and a room, and
wherein the device is preferably provided to the user pre-loaded with the sampling plan routine;
the method optionally further comprising:
- receiving a request from the user for spatial data for one of the plurality of spatial tiers of the facility (205); and
- in response to the request, displaying the spatial data to the user to facilitate the user navigating to the sampling location (207).

4. The method of any of claims 2 - 3, further comprising:
- executing a device recipe (211) for the at least one of: the particle sampling, and the particle analysis, wherein optionally the associating step comprises:
- in response to the device executing the device recipe for the at least one of: the particle sampling, and the particle analysis, storing sample data (211) for the sampling location in association with: the unique identifier, and an identifier of the device recipe.

5. The method of any of claims 1 - 4, further comprising:
- loading user instructions (404) corresponding to the sampling plan routine wherein the device is provided to the user pre-loaded with the user instructions.

6. The method of claim 5 further comprising:
- displaying the user instructions in response to receiving an arrival indication,
wherein the arrival indication indicates arrival of the device at a particular sampling location and
wherein optionally the arrival indication is generated by the device via automated location sensing.

7. The method of claim 5, further comprising:
- receiving a request from the user for the user instructions for the sampling (406);
- determining responsive user instructions for the sampling location (408); and
- displaying the responsive user instructions to the user (410) as at least one of text and graphics.

8. The method of claim 7, wherein the request from the user is received via the GUI, and wherein optionally the user interacts with the GUI via a touchscreen display of the device.

9. The method of any of claims 7 - 8, wherein the request is received from the user via a GUI drop-down menu including at least one of: textual and graphical descriptors of the plurality of spatial tiers of the facility, and wherein the receiving step includes receiving an indication of which of the textual and/or graphical descriptors was selected by the user from the drop-down menu.

10. The method of -claim 3, wherein the displaying step includes displaying one or more graphical maps to the user, wherein the one or more graphical maps include at least one of: textual labels and graphical labels for the one or more of the plurality of spatial tiers of the facility, and wherein said method optionally further comprises:
- displaying a graphical map of the room, wherein the graphical map includes the sampling location.

11. The method of any of claims 1 and 3-10, further comprising causing the graphical map to be displayed, to the user, as a portion of a GUI.

12. The method of any of claims 1 - 11, wherein sample data is further stored in association with an identifier of the user, wherein preferably sample data is further stored in association with a time and date at which the device sampled the environment at the sampling location.

13. The method of any of claims 1 - 12, wherein the method is a computer-implemented method.

14. A portable particle sampling device (180), comprising:
a device housing (121) including a sampling port (123);
a sampler (125) positioned in the housing and in flow communication with the sampling port;
a display (127) visible to a user of the device; and
a processor (103) in communication with: the display, the sampler, and at least one memory device (105) positioned at least one of: in or on the device housing, and remote from the device housing, wherein the processor is programmed to:
- associate a device sampling location in a facility with a unique identifier, wherein the unique identifier comprises an area and the sampling position;
- facilitate a user of the device selecting the area;
- load a sampling plan routine (402), wherein the sampling plan routine includes:
the spatial data of the facility; and
text and/or graphics which provide user instructions to a user as to how to operate the device;
- display (207), via a graphical user interface (GUI) on the display, the sampling location associated with the selected area to the user including spatial data displayed as a graphical map to the user.

## Patentansprüche

1. Verfahren (200) zum Betreiben einer tragbaren Partikelprobenentnahmevorrichtung zur Probenentnahme einer Umgebung an einem Probenentnahmeort in einer Anlage, wobei das Verfahren die folgenden Schritte umfasst:
- Zuordnen eines Probenentnahmeortes zu einer eindeutigen Kennung, wobei die eindeutige Kennung einen Bereich und den Probenentnahmeort umfasst;
- Auswählen des Bereichs;
- Laden einer Probenentnahmeplanroutine (402),
wobei die Probenentnahmeplanroutine enthält:
die räumlichen Daten der Anlage, und
Text und/oder Grafiken, die einem Benutzer Anweisungen für die Bedienung der Vorrichtung geben;
- Anzeigen des Probenentnahmeorts, der mit dem ausgewählten Bereich verbunden ist, auf einer grafischen Benutzeroberfläche (GUI), die mit der Vorrichtung verbunden ist (207), wobei das Anzeigen das Veranlassen der Anzeige von räumlichen Daten als eine grafische Karte für den Benutzer umfasst; und
- Probenentnahme der Umgebung an dem Probenentnahmeort mit der Vorrichtung.

2. Verfahren nach Anspruch 1, welches ferner umfasst:
- das Empfangen einer Anzeige, dass die Vorrichtung an einem Probenentnahmeort angekommen ist (209); und
- als Reaktion auf die Anzeige, das Laden eines Vorrichtungsrezepts (210) für mindestens eines aus: Partikelprobenentnahme und Partikelanalyse, vor der Probenentnahme der Umgebung an der Probenentnahmestelle mit der Vorrichtung.

3. Verfahren nach einem der Ansprüche 1-2, welches ferner umfasst:
- das Bereitstellen der Vorrichtung für einen Benutzer, der mit der Partikelprobenentnahme einer Anlage am Probenentnahmeort beauftragt ist (203), wobei die Anlage eine Vielzahl von räumlichen Ebenen aufweist, einschließlich: des Bereichs und eines Raumes, und wobei die Vorrichtung dem Benutzer vorzugsweise mit der Probenentnahmeplanroutine vorgeladen zur Verfügung gestellt wird,
wobei das Verfahren gegebenenfalls weiterhin umfasst:
- das Empfangen einer Anfrage des Benutzers nach räumlichen Daten für eine der Vielzahl von räumlichen Ebenen der Anlage (205); und
- als Antwort auf die Anfrage, das Anzeigen der räumlichen Daten für den Benutzer, um dem Benutzer das Navigieren zu dem Probenentnahmeort zu erleichtern (207).

4. Verfahren nach einem der Ansprüche 2-3, welches ferner umfasst:
- das Ausführen eines Vorrichtungsrezepts (211) für das mindestens eine aus: der Partikelprobenentnahme und der Partikelanalyse, wobei der Zuordnungsschritt gegebenenfalls umfasst:
- als Reaktion darauf, dass die Vorrichtung das Vorrichtungsrezept für das mindestens eine aus: der Partikelprobenentnahme und der Partikelanalyse ausführt, das Speichern von Probendaten (211) für den Probenentnahmeort in Verbindung mit: der eindeutigen Kennung und einer Kennung des Vorrichtungsrezepts.

5. Verfahren nach einem der Ansprüche 1-4, welches ferner umfasst:
- das Laden von Benutzeranweisungen (404), die der Probenentnahmeplanroutine entsprechen,
wobei die Vorrichtung dem Benutzer mit den Benutzeranweisungen vorgeladen zur Verfügung gestellt wird.

6. Verfahren nach Anspruch 5, welches ferner umfasst:
- das Anzeigen der Benutzeranweisungen in Reaktion auf den Empfang einer Ankunftsanzeige,
wobei die Ankunftsanzeige die Ankunft der Vorrichtung an einem bestimmten Probenentnahmeort anzeigt und
wobei gegebenenfalls die Ankunftsanzeige durch die Vorrichtung über eine automatische Standortbestimmung erzeugt wird.

7. Verfahren nach Anspruch 5, welches ferner umfasst:
- das Empfangen einer Anfrage des Benutzers nach den Benutzeranweisungen für die Probenentnahme (406);
- das Bestimmen von entsprechenden Benutzeranweisungen für den Ort der Probenentnahme (408); und
- das Anzeigen der entsprechenden Benutzeranweisungen für den Benutzer (410) als mindestens eines aus: Text und Grafik.

8. Verfahren nach Anspruch 7, wobei die Anfrage des Benutzers über die GUI empfangen wird, und wobei der Benutzer gegebenenfalls mit der GUI über eine Touchscreen-Anzeige der Vorrichtung interagiert.

9. Verfahren nach einem der Ansprüche 7-8, wobei die Anfrage vom Benutzer über ein GUI-Dropdown-Menü empfangen wird, das mindestens eines enthält aus: textlichen und grafischen Deskriptoren der Vielzahl von räumlichen Ebenen der Anlage, und wobei der Empfangsschritt das Empfangen einer Angabe darüber umfasst, welcher der textlichen und/oder grafischen Deskriptoren vom Benutzer aus dem Dropdown-Menü ausgewählt wurde.

10. Verfahren nach Anspruch 3, wobei der Anzeigeschritt das Anzeigen einer oder mehrerer grafischer Karten für den Benutzer einschließt, wobei die eine oder die mehreren grafischen Karten mindestens eines einschließen aus: Textbeschriftungen und grafische Beschriftungen für die eine oder die mehreren der Vielzahl von räumlichen Ebenen der Anlage, und wobei das Verfahren gegebenenfalls ferner umfasst:
- das Anzeigen einer grafischen Karte des Raums,
wobei die grafische Karte den Probenentnahmeort enthält.

11. Verfahren nach einem der Ansprüche 1 und 3-10, welches ferner umfasst, dass die grafische Karte dem Benutzer als Teil einer GUI angezeigt wird.

12. Verfahren nach einem der Ansprüche 1-11, wobei die Probendaten ferner in Verbindung mit einer Kennung des Benutzers gespeichert werden, wobei die Probendaten vorzugsweise ferner in Verbindung mit einer Uhrzeit und einem Datum gespeichert werden, zu denen die Vorrichtung eine Probe der Umgebung an der Probenentnahmestelle entnommen hat.

13. Verfahren nach einem der Ansprüche 1-12, wobei das Verfahren ein computerimplementiertes Verfahren ist.

14. Tragbare Partikelprobenentnahmevorrichtung (180), umfassend:
ein Gerätegehäuse (121) mit einer Probenentnahmeöffnung (123);
einen Probenentnehmer (125), der in dem Gehäuse angeordnet ist und in Strömungsverbindung mit der Probenentnahmeöffnung steht;
eine Anzeige (127), die für einen Benutzer der Vorrichtung sichtbar ist; und
einen Prozessor (103), der in Verbindung steht mit: der Anzeige, dem Probenentnehmer und mindestens einer Speichervorrichtung (105), angeordnet in oder an dem Vorrichtungsgehäuse und/oder entfernt von dem Vorrichtungsgehäuse, wobei der Prozessor programmiert ist, um:
- einem Probenentnahmeort der Vorrichtung in einer Anlage eine eindeutigen Kennung zuzuordnen,
wobei die eindeutige Kennung einen Bereich und die Probenentnahmeposition umfasst;
- einem Benutzer der Vorrichtung die Auswahl des Bereichs zu erleichtern;
- eine Probenentnahmeplanroutine (402) zu laden,
wobei die Probenentnahmeplanroutine umfasst:
die räumlichen Daten der Anlage, und
Text und/oder Grafiken, die einem Benutzer Benutzeranweisungen zur Bedienung der Vorrichtung geben;
- über eine grafische Benutzerschnittstelle (GUI) auf dem Display den Probenentnahmeort, der mit dem ausgewählten Gebiet verbunden ist, für den Benutzer anzuzeigen (207), einschließlich räumlicher Daten, die als eine grafische Karte für den Benutzer angezeigt werden.

## Revendications

1. Procédé (200) de fonctionnement d'un dispositif d'échantillonnage de particules portable pour échantillonner un environnement à un emplacement d'échantillonnage dans une installation, le procédé comportant les étapes consistant à :
- associer un emplacement d'échantillonnage à un identifiant unique, dans lequel l'identifiant unique comporte une zone et l'emplacement d'échantillonnage ;
- sélectionner la zone ;
- charger une routine de plan d'échantillonnage (402),
dans lequel la routine de plan d'échantillonnage inclut :
les données spatiales de l'installation ; et
du texte et/ou des graphiques qui utilisent des instructions d'utilisateur destinées à un utilisateur sur la manière de faire fonctionner le dispositif ;
- afficher l'emplacement d'échantillonnage associé à la zone sélectionnée sur une interface utilisateur graphique (GUI) connectée au dispositif (207),
dans lequel ledit affichage inclut d'entraîner l'affichage de données spatiales à l'utilisateur sous la forme d'une carte graphique ; et
- échantillonner l'environnement à l'emplacement d'échantillonnage avec le dispositif.

2. Procédé selon la revendication 1, comportant en outre les étapes consistant à :
- recevoir une indication que le dispositif est arrivé à l'emplacement d'échantillonnage (209) ; et
- en réponse à l'indication, charger une recette de dispositif (210) pour au moins une opération parmi un échantillonnage de particules et une analyse de particules, avant d'échantillonner l'environnement à l'emplacement d'échantillonnage avec le dispositif.

3. Procédé selon l'une quelconque des revendications 1 à 2, comportant en outre l'étape consistant à :
- fournir le dispositif à un utilisateur chargé de l'échantillonnage d'une installation à l'emplacement d'échantillonnage (203),
dans lequel l'installation a une pluralité d'étages spatiaux incluant : la zone et une pièce, et
dans lequel le dispositif est de préférence fourni à l'utilisateur préchargé avec la routine de plan d'échantillonnage ;
le procédé comportant en outre facultativement les étapes consistant à :
- recevoir une demande de l'utilisateur concernant des données spatiales pour un étage parmi les étages spatiaux de l'installation (205) ; et
- en réponse à la demande, afficher les données spatiales à l'utilisateur pour faciliter la navigation de l'utilisateur jusqu'à l'emplacement d'échantillonnage (207).

4. Procédé selon l'une quelconque des revendications 2 à 3, comportant en outre l'étape consistant à :
- exécuter une recette de dispositif (211) pour au moins une opération parmi l'échantillonnage de particules et l'analyse de particules, dans lequel l'étape d'association comporte :
- en réponse au dispositif exécutant la recette de dispositif pour au moins une opération parmi l'échantillonnage de particules et l'analyse de particules, le stockage des données d'échantillons (211) pour l'emplacement d'échantillonnage en association avec : l'identifiant unique et un identifiant de la recette de dispositif.

5. Procédé selon l'une quelconque des revendications 1 à 4, comportant en outre l'étape consistant à :
- charger des instructions d'utilisateur (404) correspondant à la routine de plan d'échantillonnage,
dans lequel le dispositif est fourni à l'utilisateur préchargé avec les instructions d'utilisateur.

6. Procédé selon la revendication 5, comportant en outre l'étape consistant à :
- afficher les instructions d'utilisateur en réponse à la réception d'une indication d'arrivée,
dans lequel l'indication d'arrivée indique une arrivée du dispositif à un emplacement d'échantillonnage particulier et
dans lequel l'indication d'arrivée est facultativement générée par le dispositif via une détection d'emplacement automatisée.

7. Procédé selon la revendication 5, comportant en outre les étapes consistant à :
- recevoir une demande de l'utilisateur concernant les instructions d'utilisateur pour l'échantillonnage (406) ;
- déterminer des instructions d'utilisateur en réponse concernant l'emplacement d'échantillonnage (408) ; et
- afficher les instructions d'utilisateur en réponse à l'utilisateur (410) sous la forme d'au moins un élément parmi du texte et des graphiques.

8. Procédé selon la revendication 7, dans lequel la demande de l'utilisateur est reçue via la GUI, et dans lequel l'utilisateur interagit facultativement avec la GUI via un affichage à écran tactile du dispositif.

9. Procédé selon l'une quelconque des revendications 7 à 8, dans lequel la demande est reçue de l'utilisateur via un menu déroulant de GUI incluant au moins un élément parmi : des descripteurs textuels et graphiques de la pluralité d'étages spatiaux de l'installation, et dans lequel l'étape de réception inclut la réception d'une indication des descripteurs textuels et/ou graphiques qui ont été sélectionnés par l'utilisateur à partir du menu déroulant.

10. Procédé selon la revendication 3, dans lequel l'étape d'affichage inclut l'affichage d'une ou plusieurs cartes graphiques à l'utilisateur, dans lequel la ou les cartes graphiques incluent au moins un élément parmi : des étiquettes textuelles et des étiquettes graphiques pour l'étage ou les étages parmi la pluralité d'étages spatiaux de l'installation, et dans lequel ledit procédé comporte en outre facultativement l'étape consistant à :
- afficher une carte graphique de la pièce,
dans lequel la carte graphique inclut l'emplacement d'échantillonnage.

11. Procédé selon l'une quelconque des revendications 1 et 3 à 10, comportant en outre d'entraîner l'affichage de la carte graphique, à l'utilisateur, sous la forme d'une partie d'une GUI.

12. Procédé selon l'une quelconque des revendications 1 à 11, dans lequel des données d'échantillons sont en outre stockées en association avec un identifiant de l'utilisateur, dans lequel les données d'échantillons sont de préférence en outre stockées en association avec une heure et une date auxquelles le dispositif a échantillonné l'environnement à l'emplacement d'échantillonnage.

13. Procédé selon l'une quelconque des revendications 1 à 12, dans lequel le procédé est un procédé mis en oeuvre par ordinateur.

14. Dispositif d'échantillonnage de particules portable (180), comportant :
un boîtier de dispositif (121) incluant un port d'échantillonnage (123) ;
un échantillonneur (125) positionné dans le boîtier et en communication d'écoulement avec le port d'échantillonnage ;
un affichage (127) visible d'un utilisateur du dispositif ; et
un processeur (103) en communication avec : l'affichage, l'échantillonneur et au moins un dispositif de mémoire (105) positionné à au moins un endroit parmi : dans ou sur le boîtier de dispositif, et à distance du boîtier de dispositif, dans lequel le processeur est programmé pour :
- associer un emplacement d'échantillonnage de dispositif dans une installation à un identifiant unique,
dans lequel l'identifiant unique comporte une zone et la position d'échantillonnage ;
- faciliter la sélection de la zone par un utilisateur du dispositif ;
- charger une routine de plan d'échantillonnage (402),
dans lequel la routine de plan d'échantillonnage inclut :
les données spatiales de l'installation ; et
du texte et/ou des graphiques qui fournissent des instructions d'utilisateur à un utilisateur sur la manière de faire fonctionner le dispositif ;
- afficher (207) à l'utilisateur, via une interface utilisateur graphique (GUI) sur l'affichage, l'emplacement d'échantillonnage associé à la zone sélectionnée, y compris des données spatiales affichées à l'utilisateur sous la forme d'une carte graphique.
